# EUROPEAN PATENT SPECIFICATION

(11) **EP 3 370 459 B1**
(45) Date of publication and mention of the grant of the patent: **18.09.2019**
(21) Application number: 15909453.1
(22) Date of filing: 30.11.2015
(51) Int. Cl.: H04W 48/06, H04W 48/12

(54) **CONTROL METHOD FOR UPLINK DATA TRANSMISSION, USER EQUIPMENT AND NETWORK SERVER**
STEUERUNGSVERFAHREN ZUR UPLINK-DATENÜBERTRAGUNG, BENUTZERGERÄT UND NETZWERKSERVER
PROCÉDÉ DE COMMANDE POUR UNE TRANSMISSION DE DONNÉES DE LIAISON MONTANTE, ÉQUIPEMENT UTILISATEUR ET SERVEUR DE RÉSEAU

(43) Date of publication of application: 05.09.2018
(73) Proprietor: Huawei Technologies Co., Ltd., Longgang District Shenzhen, Guangdong 518129 (CN)
(72) Inventor: GENG, Tingting, Shenzhen Guangdong 518129 (CN); CHEN, Jun, Shenzhen Guangdong 518129 (CN)
(74) Representative: Pfenning, Meinig & Partner mbB
(86) International application number: PCT/CN2015/095942
(87) International publication number: WO 2017/091936

(56) References cited:
- EP-A1- 2 843 990
- WO-A1-2014/073866
- CN-A- 102 761 933
- CN-A- 104 322 108
- CN-A- 104 322 108
- CN-A- 104 717 693
- HUAWEI ET AL: "Discussion on Access Group based access control enhancements", 3GPP DRAFT; R2-141371 DISCUSSION ON ACCESS GROUP BASED ACCESS CONTROL ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Valencia, Spain; 20140331 - 20140404 22 March 2014 (2014-03-22), XP050792564, Retrieved from the Internet: URL:http://www.3gpp.org/ftp/Meetings_3GPP_ SYNC/RAN2/Docs/ [retrieved on 2014-03-22]
- HUAWEI ET AL: "Discussion on Access Group based access control enhancements", 3GPP DRAFT; R2-140165 DISCUSSION ON ACCESS GROUP BASED ACCESS CONTROL ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Prague, Czech Republic; 20140210 - 20140214 29 January 2014 (2014-01-29), XP050753883, Retrieved from the Internet: URL:http://www.3gpp.org/ftp/tsg_ran/WG2_RL 2/TSGR2_85/Docs/ [retrieved on 2014-01-29]
- TELIASONERA ET AL: "Differentiation per traffic type", 3GPP DRAFT; R2-142423 DIFFERENTIATION PER TRAFFIC TYPE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 9 May 2014 (2014-05-09), XP050818493, Retrieved from the Internet: URL:http://www.3gpp.org/ftp/tsg_ran/WG2_RL 2/TSGR2_86/Docs/ [retrieved on 2014-05-09]

## Description

### TECHNICAL FIELD

Embodiments of the present disclosure relate to the field of communications technologies, and in particular, to an uplink data transmission control method, a user terminal, and a network server.

### BACKGROUND

In a universal mobile telecommunications system (UMTS), a status of a user terminal (UE) may be classified into an idle state and a connection state. The connection state is classified into a cell paging channel (CELL-PCH) state, a UTRAN registration area paging channel (URA-PCH) state, a cell forward access channel (CELL-FACH) state, and a cell dedicated channel (CELL-DCH) state.

Currently, to provide the user terminal (UE) with reliable communication quality of service (QoS), accessed UEs are grouped into a plurality of access groups in a network, and an access control solution based on an access group (AG) is introduced, so as to control uplink data transmission of the UE. As application software develops, different types of application software require different data service volumes. Therefore, an application specific congestion control for data connectivity (ACDC) solution emerges. As the UE has a constantly increasing demand for a data service volume, how to precisely control uplink data transmission of the UE is an urgent problem to be resolved.

HUAWEI ET AL in "Discussion on Access Group based access control enhancements", vol. RAN WG2, no. Valencia, Spain; 20140331 - 20140404, (20140322), 3GPP DRAFT; R2-141371 DISCUSSION ON ACCESS GROUP BASED ACCESS CONTROL ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIP, URL: http://www.3gpp.org/ftp/Meetings_3GPP_SYNC/RAN2/Docs/, (20140322), describes that access to an uplink is based on access parameters, access parameters being based on an Access Group and traffic types in addition to Access Groups.

### SUMMARY

According to the present application, the above objects are solved by the claimed matter according to the independent claims. Embodiments of the present disclosure disclose an uplink data transmission control method, a user terminal, and a network server, so as to precisely control uplink data transmission of the user terminal.

A first aspect of an embodiment of the present disclosure discloses an uplink data transmission control method, including:
receiving, by a user terminal, an access control parameter from a network server, where the access control parameter is used to control uplink data transmission of the user terminal, and the access control parameter includes a first access control parameter based on an access group and a second access control parameter based on an application type;
determining, by the user terminal based on the first access control parameter and the second access control parameter, whether the network server allows the user terminal to perform uplink data transmission in terms of access group and application type; and
when the network server allows the user terminal to perform uplink data transmission in terms of both access group and application type, sending, by the user terminal, uplink data to the network server; or
when the network server does not allow the user terminal to perform uplink data transmission in terms of at least one of the access group and the application type, skipping sending, by the user terminal, uplink data to the network server.

It can be learned that the user terminal can receive both two types of access control parameters, and uplink data transmission of the user terminal can be controlled based on the two types of access control parameters, so that uplink data transmission of the user terminal can be precisely controlled.

Optionally, the determining, by the user terminal based on the first access control parameter and the second access control parameter, whether the network server allows the user terminal to perform uplink data transmission in terms of access group and application type includes:
determining, by the user terminal based on the first access control parameter, whether the network server allows a user terminal included in an access group in which the user terminal is located to perform uplink data transmission, and determining, based on the second access control parameter, whether the network server allows an application type of an application on the user terminal to perform uplink data transmission; and
when the network server allows the user terminal included in the access group in which the user terminal is located to perform uplink data transmission, and allows the application type of the application on the user terminal to perform uplink data transmission, determining, by the user terminal, that the network server allows the user terminal to perform uplink data transmission in terms of both access group and application type; or
when the network server does not allow the user terminal included in the access group in which the user terminal is located to perform uplink data transmission, and/or does not allow the application type of the application on the user terminal to perform uplink data transmission, determining, by the user terminal, that the network server does not allow the user terminal to perform uplink data transmission in terms of at least one of the access group and the application type.

Specifically, the user terminal may first determine, based on the first access control parameter, whether the network server allows the user terminal included in the access group in which the user terminal is located to perform uplink data transmission, and then perform determining based on the second access control parameter if the network server allows the user terminal included in the access group in which the user terminal is located to perform uplink data transmission. Alternatively, the user terminal may first determine, based on the second access control parameter, whether the network server allows an application type of an application that needs to be used by the user terminal to perform uplink data transmission, and then perform determining based on the first access control parameter if the network server allows the application type of the application that needs to be used by the user terminal to perform uplink data transmission. Alternatively, the user terminal may simultaneously determine, based on the first access control parameter and the second access control parameter, whether the network server allows the user terminal included in the access group in which the user terminal is located and the application type of the application that needs to be used by the user terminal to perform uplink data transmission.

Optionally, when the user terminal is in a cell paging channel (CELL-PCH) state or a UTRAN registration area paging channel (URA-PCH) state, before the sending, by the user terminal, uplink data to the network server, the method further includes:
sending, by the user terminal, uplink data transmission signaling to the network server.

The uplink data transmission signaling may include measurement report (MR) signaling or cell update (CU) signaling. It can be understood that the MR signaling is mainly used to notify the network server that the user terminal is to send uplink data. The CU signaling is mainly used to notify the network server that the user terminal needs to send uplink data, and request the network server to allow the user terminal to send the uplink data. Therefore, the network server needs to return, to the user terminal, response information indicating whether to allow the user terminal to send the uplink data, and the user terminal determines, based on the response information, whether to send the uplink data.

Optionally, when the user terminal is in a CELL-PCH state or a URA-PCH state, the skipping sending, by the user terminal, uplink data to the network server includes:
skipping sending uplink data transmission signaling to the network server, and skipping sending the uplink data to the network server.

It can be learned that when the user terminal is in a CELL-PCH state or a URA-PCH state, the user terminal needs to send the uplink data transmission signaling to the network server, and switches to a CELL-FACH state. The user terminal can send the uplink data only when determining, based on the access control parameter, that the network server allows the user terminal to perform uplink data transmission in terms of both access group and application type. Alternatively, the user terminal sends neither the uplink data transmission signaling nor the uplink data when determining, based on the access control parameter, that the network server does not allow the user terminal to perform uplink data transmission in terms of at least one of the access group and the application type, so as to reduce unnecessary data or signaling sending, and prevent affecting network resources.

Optionally, when the uplink data transmission signaling includes the CU signaling, and the CU signaling includes the application type of the application on the user terminal, after the sending, by the user terminal, uplink data transmission signaling to the network server, the method further includes:
receiving, by the user terminal, response information returned by the network server for the application type.

A specific manner of the sending, by the user terminal, uplink data to the network server is:
when the response information indicates that the application type of the user terminal is allowed to perform uplink data transmission, and the network server allows the user terminal to perform uplink data transmission in terms of both access group and application type, sending, by the user terminal, the uplink data to the network server.

Optionally, when the uplink data transmission signaling includes the CU signaling, and the CU signaling includes the application type of the application on the user terminal, after the sending, by the user terminal, uplink data transmission signaling to the network server, the method further includes:
receiving response information returned by the network server for the application type; and
when the response information indicates that the application type of the user terminal is not allowed to perform uplink data transmission, and the response information further includes a waiting time, skipping sending, by the user terminal, uplink data of the application type to the network server, and skipping sending CU signaling including the application type to the network server within the waiting time. The waiting time is a dedicated waiting time for the application type, and is not applicable to another application type.

Optionally, when the response information indicates that the application type of the user terminal is not allowed to perform uplink data transmission, and the response information further includes a waiting time, after the receiving, by the user terminal, response information returned by the network server for the application type, the method further includes:
generating, by the user terminal, a random time for the response information, where the random time may be less than or equal to the waiting time, or may be an integer multiple of the waiting time.

The skipping sending, by the user terminal, CU signaling including the application type to the network server within the waiting time includes:
skipping sending the CU signaling including the application type to the network server within the random time.

It can be learned that when the user terminal is in a CELL-PCH state or a URA-PCH state in seamed migration, after the user terminal sends the CU signaling to the network server, if the network server returns, based on the CU signaling, the response information indicating that the application type of the user terminal is not allowed to perform uplink data transmission, the user terminal does not send CU signaling including the same application type to the network server within the random time. Therefore, congestion of a communications network caused because a plurality of user terminals simultaneously send CU signaling including a same application type after the waiting time expires can be avoided.

A second aspect of an embodiment of the present disclosure discloses an uplink data transmission control method, including:
broadcasting, by a network server, or sending, through a dedicated channel, an access control parameter to a user terminal, where the access control parameter is used to control uplink data transmission of the user terminal, and the access control parameter includes a first access control parameter based on an access group and a second access control parameter based on an application type; and
receiving, by the network server, uplink data sent by the user terminal, where the uplink data is sent by the user terminal to the network server after the user terminal determines, based on the first access control parameter and the second access control parameter, that the network server allows the user terminal to perform uplink data transmission.

It should be noted that the network server may simultaneously or asynchronously broadcast the first access control parameter and the second access control parameter to the user terminal, or may simultaneously or asynchronously send the first access control parameter and the second access control parameter to the user terminal through a dedicated channel. This embodiment of the present disclosure imposes no limitation.

It can be learned that the network server may broadcast or send the first access control parameter based on the access group and the second access control parameter based on the application type to the user terminal. Before the user terminal needs to perform uplink data transmission, the user terminal uses both the two types of access control parameters to determine whether to send the uplink data. In this manner, uplink data transmission of the user terminal can be controlled in terms of both access group and application type, so that uplink data transmission of the user terminal can be precisely controlled, network congestion is avoided, and network resource utilization is improved.

A third aspect of an embodiment of the present disclosure discloses a user terminal, including:
a receiving module, configured to receive an access control parameter from a network server, where the access control parameter is used to control uplink data transmission of the user terminal, and the access control parameter includes a first access control parameter based on an access group and a second access control parameter based on an application type;
a judging module, configured to determine, based on the first access control parameter and the second access control parameter, whether the network server allows the user terminal to perform uplink data transmission in terms of access group and application type;
a sending module, configured to: when the judging module determines that the network server allows the user terminal to perform uplink data transmission in terms of both access group and application type, send uplink data to the network server; and
a control module, configured to: when the judging module determines that the network server does not allow the user terminal to perform uplink data transmission in terms of at least one of the access group and the application type, control the sending module not to send uplink data to the network server.

It can be learned that the user terminal can receive both two types of access control parameters, and uplink data transmission of the user terminal can be controlled based on the two types of access control parameters, so that uplink data transmission of the user terminal can be precisely controlled.

Optionally, the judging module may include a judging submodule and a determining submodule.

The judging submodule is configured to: determine, based on the first access control parameter, whether the network server allows a user terminal included in an access group in which the user terminal is located to perform uplink data transmission; and determine, based on the second access control parameter, whether the network server allows an application type of an application on the user terminal to perform uplink data transmission.

The determining submodule is configured to: when the judging submodule determines that the network server allows the user terminal included in the access group in which the user terminal is located to perform uplink data transmission, and allows the application type of the application on the user terminal to perform uplink data transmission, determine that the network server allows the user terminal to perform uplink data transmission in terms of both access group and application type.

The determining submodule is further configured to: when the judging submodule determines that the network server does not allow the user terminal included in the access group in which the user terminal is located to perform uplink data transmission, and/or does not allow the application type of the application on the user terminal to perform uplink data transmission, determine that the network server does not allow the user terminal to perform uplink data transmission in terms of at least one of the access group and the application type.

Optionally, the sending module is further configured to: when the user terminal is in a CELL-PCH state or a URA-PCH state, send uplink data transmission signaling to the network server, where the uplink data transmission signaling may include MR signaling or CU signaling.

Optionally, the control module is configured to control the sending module not to send the uplink data to the network server by:
when the user terminal is in a CELL-PCH state or a URA-PCH state, controlling the sending module not to send the uplink data transmission signaling to the network server, and not to send the uplink data to the network server.

It can be learned that when the user terminal is in a CELL-PCH state or a URA-PCH state, the user terminal needs to send the uplink data transmission signaling to the network server, and switches to a CELL-FACH state. The user terminal can send the uplink data only when determining, based on the access control parameter, that the network server allows the user terminal to perform uplink data transmission in terms of both access group and application type. Alternatively, the user terminal sends neither the uplink data transmission signaling nor the uplink data when determining, based on the access control parameter, that the network server does not allow the user terminal to perform uplink data transmission in terms of at least one of the access group and the application type, so as to reduce unnecessary data or signaling sending, and prevent affecting network resources.

Optionally, when the uplink data transmission signaling includes the CU signaling, and the CU signaling further includes the application type of the application on the user terminal, after the sending module sends the CU signaling to the network server, the receiving module is triggered to receive response information returned by the network server for the application type.

Therefore, the receiving module is further configured to receive the response information returned by the network server for the application type.

In this case, the sending module is configured to send the uplink data to the network server by:
when the response information indicates that the application type of the user terminal is allowed to perform uplink data transmission, and the network server allows the user terminal to perform uplink data transmission in terms of both access group and application type, sending the uplink data to the network server.

Optionally, when the uplink data transmission signaling includes the CU signaling, and the CU signaling further includes the application type of the application on the user terminal, after the sending module sends the CU signaling to the network server, the receiving module is triggered to receive response information returned by the network server for the application type.

Therefore, the receiving module is further configured to receive the response information returned by the network server for the application type.

In this case, the control module is further configured to: when the response information indicates that the application type of the user terminal is not allowed to perform uplink data transmission, and the response information further includes a waiting time, control the sending module not to send uplink data of the application type to the network server, and not to send CU signaling including the application type to the network server within the waiting time. The waiting time is a dedicated waiting time for the application type, and is not applicable to another application type.

Optionally, the user terminal may further include:
a generation module, configured to: when the response information indicates that the application type of the user terminal is not allowed to perform uplink data transmission, and the response information further includes a waiting time, generate a random time for the response information, where the random time may be less than or equal to the waiting time, or may be an integer multiple of the waiting time.

In this case, it can be understood that the control module is configured to control the sending module not to send the CU signaling including the application type to the network server within the waiting time by:
controlling the sending module not to send the CU signaling including the application type to the network server within the random time.

It can be learned that when the user terminal is in a CELL-PCH state or a URA-PCH state in seamed migration, after the user terminal sends the CU signaling to the network server, if the network server returns, based on the CU signaling, the response information indicating that the application type of the user terminal is not allowed to perform uplink data transmission, the user terminal does not send CU signaling including the same application type to the network server within the random time. Therefore, congestion of a communications network caused because a plurality of user terminals simultaneously send CU signaling including a same application type after the waiting time expires can be avoided.

A fourth aspect of an embodiment of the present disclosure discloses another user terminal, including a receiver, a processor, and a transmitter. The receiver can receive data sent by an external device, and the transmitter can send data to the external device when the transmitter needs to send the data.

The receiver is specifically configured to perform operations in the foregoing method steps, for example, receiving an access control parameter sent by a network server and response information returned for CU signaling. The transmitter is configured to perform operations in the foregoing method steps, for example, sending uplink data or uplink data transmission signaling to the network server. In addition, the processor is configured to perform a related processing operation on the access control parameter or the uplink data in the foregoing method steps.

A fifth aspect of an embodiment of the present disclosure discloses a network server, including:
a sending module, configured to broadcast, or send, through a dedicated channel, an access control parameter to a user terminal, where the access control parameter is used to control uplink data transmission of the user terminal, and the access control parameter includes a first access control parameter based on an access group and a second access control parameter based on an application type; and
a receiving module, configured to receive uplink data sent by the user terminal, where the uplink data is sent by the user terminal to the network server after the user terminal determines, based on the first access control parameter and the second access control parameter, that the network server allows the user terminal to perform uplink data transmission.

It can be learned that the network server may broadcast or send the first access control parameter based on the access group and the second access control parameter based on the application type to the user terminal. Before the user terminal needs to perform uplink data transmission, the user terminal uses both the two types of access control parameters to determine whether to send the uplink data. In this manner, uplink data transmission of the user terminal can be controlled in terms of both access group and application type, so that uplink data transmission of the user terminal can be precisely controlled, network congestion is avoided, and network resource utilization is improved.

A sixth aspect of an embodiment of the present disclosure discloses a network server, including a transmitter and a receiver. The transmitter is equivalent to the sending module in the foregoing network server, and is configured to broadcast, or send, through a dedicated channel, an access control parameter to a user terminal. The receiver is equivalent to the receiving module in the foregoing network server, and is configured to receive uplink data sent by the user terminal.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a schematic diagram of a network architecture according to an embodiment of the present disclosure;
FIG. 2 is a schematic flowchart of an uplink data transmission control method according to an embodiment of the present disclosure;
FIG. 3 is a schematic flowchart of another uplink data transmission control method according to an embodiment of the present disclosure;
FIG. 4A and FIG. 4B are a schematic flowchart of still another uplink data transmission control method according to an embodiment of the present disclosure;
FIG. 5 is a schematic flowchart of yet another uplink data transmission control method according to an embodiment of the present disclosure;
FIG. 6 is a schematic structural diagram of a user terminal according to an embodiment of the present disclosure;
FIG. 7 is a schematic structural diagram of another user terminal according to an embodiment of the present disclosure;
FIG. 8 is a schematic structural diagram of still another user terminal 800 according to an embodiment of the present disclosure;
FIG. 9 is a schematic structural diagram of yet another user terminal 900 according to an embodiment of the present disclosure;
FIG. 10 is a schematic structural diagram of a network server 1000 according to an embodiment of the present disclosure; and
FIG. 11 is a schematic structural diagram of another network server 1100 according to an embodiment of the present disclosure.

### DESCRIPTION OF EMBODIMENTS

The following clearly describes the technical solutions in the embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

Embodiments of the present disclosure disclose an uplink data transmission control method, a user terminal, and a network server, so as to precisely control uplink data transmission of the user terminal. Details are separately illustrated in the following.

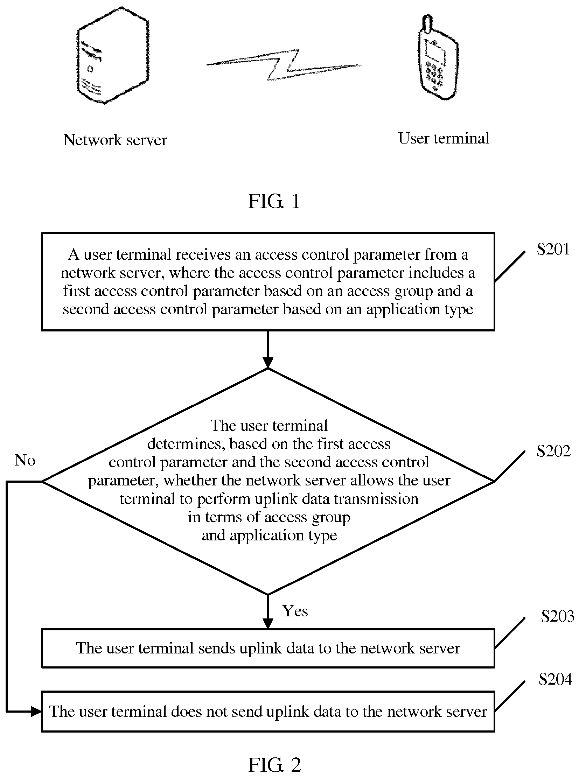

To better understand the uplink data transmission control method, the user terminal, and the network server disclosed in the embodiments of the present disclosure, the following first describes a network architecture applicable to the embodiments of the present disclosure. Referring to FIG. 1, FIG. 1 is a schematic diagram of a network architecture according to an embodiment of the present disclosure. The network architecture shown in FIG. 1 may include a network server and a user terminal. The network server may include but is not limited to a base station, a radio network controller, and a base station controller. The user terminal may include but is not limited to a mobile phone, a tablet computer, a personal digital assistant (PDA), and a mobile Internet device (MID). In the network architecture shown in FIG. 1, the network server broadcasts or sends, to each user terminal, an access control parameter used to control uplink data transmission of the user terminal. When the user terminal needs to send uplink data to the network server, the user terminal determines, based on the received access control parameter, whether to send the uplink data, so as to quickly and effectively control uplink data transmission of the user terminal.

Based on the network architecture shown in FIG. 1, an embodiment of the present disclosure discloses an uplink data transmission control method. Referring to FIG. 2, FIG. 2 is a schematic flowchart of an uplink data transmission control method according to an embodiment of the present disclosure. As shown in FIG. 2, the uplink data transmission control method may include the following steps.

S201. A user terminal receives an access control parameter from a network server, where the access control parameter includes a first access control parameter based on an access group and a second access control parameter based on an application type.

In this embodiment of the present disclosure, the network server broadcasts the access control parameter to the user terminal based on a data transmission control policy, or sends the access control parameter to the user terminal through a dedicated channel. The access control parameter is used to control uplink data transmission of the user terminal, and the access control parameter includes two types of access control parameters: the first access control parameter based on the access group and the second access control parameter based on the application type. Certainly, the network server adjusts an access control policy based on data service load of a communications network or at a specific time interval, so as to update information indicated in the access control parameter.

It should be noted that the network server may simultaneously or asynchronously broadcast the first access control parameter and the second access control parameter to the user terminal, or may simultaneously or asynchronously send the first access control parameter and the second access control parameter to the user terminal through a dedicated channel. This embodiment of the present disclosure imposes no limitation.

In this embodiment of the present disclosure, the network server groups user terminals connected to all cells or all access nodes into a plurality of access groups. To control the data service load of the communications network, uplink data transmission of the user terminal is usually controlled by controlling an access group. For example, according to a first access control parameter that is broadcast or sent by the network server in a time period, user terminals in some access groups are allowed to perform uplink data transmission, and based on a first access control parameter that is broadcast or sent in another time period, user terminals in some other access groups are allowed to perform uplink data transmission, so that uplink data transmission of each user terminal can be controlled based on an access group.

Further, the network server classifies various applications, and then controls uplink data transmission of the user terminal based on different application types. The application types may include a video type, a network game type, a standalone game type, an instant messaging type, and the like. The application types may be configured by the network server for the user terminal, or may be sent by a non-access stratum of the user terminal to an access stratum of the user terminal. This embodiment of the present disclosure imposes no limitation. For example, based on a second access control parameter that is broadcast or sent by the network server in a time period, applications of some application types are allowed to perform uplink data transmission, and based on a second access control parameter that is broadcast or sent in another time period, applications of some other application types are allowed to perform uplink data transmission, so that uplink data transmission of each user terminal can be controlled based on an application type.

Therefore, in the access control parameter received by the user terminal from the network server, the first access control parameter may include each access group and information indicating whether each access group is allowed to perform uplink data transmission. As shown in Table 1, Table 1 shows information included in the first access control parameter. 0 indicates that uplink data transmission is not allowed, and 1 indicates that uplink data transmission is allowed. Certainly, 0 may indicate that uplink data transmission is allowed, and 1 indicates that uplink data transmission is not allowed. The network server may also indicate, in another manner, whether uplink data transmission is allowed. This embodiment of the present disclosure imposes no limitation on the information included in the first access control parameter and a specific form used to indicate whether uplink data transmission is allowed. The second access control parameter may include each application type and information indicating whether each application type is allowed to perform uplink data transmission. As shown in Table 2, Table 2 shows information included in the second access control parameter. 0 indicates that uplink data transmission is not allowed, and 1 indicates that uplink data transmission is allowed. This embodiment of the present disclosure imposes no limitation on the information included in the second access control parameter and a specific form used to indicate whether uplink data transmission is allowed.

**Table 1**

| **Access groups** | **I** | **II** | **III** | **IV** | **V** | **VI** | **VII** |
|---|---|---|---|---|---|---|---|
| 0/1 | 0 | 0 | 1 | 0 | 1 | 1 | 1 |

**Table 2**

| **Application types** | **A** | **B** | **C** | **D** | **E** | **F** |
|---|---|---|---|---|---|---|
| 0/1 | 1 | 0 | 0 | 1 | 1 | 0 |

S202. The user terminal determines, based on the first access control parameter and the second access control parameter, whether the network server allows the user terminal to perform uplink data transmission in terms of access group and application type; and if the network server allows the user terminal to perform uplink data transmission in the access group and the application type, step S203 is performed; or if the network server does not allow the user terminal to perform uplink data transmission in the access group and the application type, step S204 is performed.

In this embodiment of the present disclosure, when the user terminal needs to perform uplink data transmission, the user terminal may determine, based on the received access control parameter, whether to send uplink data to the network server. That is, the user terminal determines, based on the first access control parameter, whether the network server allows the user terminal to perform uplink data transmission in the access group, and determines, based on the second access control parameter, whether the network server allows the user terminal to perform uplink data transmission in the application type.

It should be noted that the user terminal may pre-receive the access control parameter from the network server, and then when the user terminal needs to perform uplink data transmission, determine, based on the access control parameter, whether to send the uplink data; or may receive the access control parameter from the network server when the user terminal needs to perform uplink data transmission. This embodiment of the present disclosure imposes no limitation.

In specific implementation, the user terminal is configured to determine, based on the first access control parameter and the second access control parameter, whether the network server allows the user terminal to perform uplink data transmission in terms of access group and application type by performing the following steps:
Step (11): The user terminal determines, based on the first access control parameter, whether the network server allows a user terminal included in an access group in which the user terminal is located to perform uplink data transmission, and determines, based on the second access control parameter, whether the network server allows an application type of an application on the user terminal to perform uplink data transmission.
Step (12): When the network server allows the user terminal included in the access group in which the user terminal is located to perform uplink data transmission, and allows the application type of the application on the user terminal to perform uplink data transmission, determine that the network server allows the user terminal to perform uplink data transmission in terms of both access group and application type.
Step (13): When the network server does not allow the user terminal included in the access group in which the user terminal is located to perform uplink data transmission, and/or does not allow the application type of the application on the user terminal to perform uplink data transmission, determine that the network server does not allow the user terminal to perform uplink data transmission in terms of at least one of the access group and the application type.

Specifically, the user terminal may determine, based on the first access control parameter that is broadcast or sent by the network server, whether the access group in which the user terminal is located is allowed to perform uplink data transmission (that is, whether the network server allows the access group in which the user terminal is located to perform uplink data transmission), and determine, based on the second access control parameter, whether an application type of an application that needs to be used by the user terminal is allowed to perform uplink data transmission (that is, whether the network server allows the application type of the application that needs to be used by the user terminal to perform uplink data transmission). If the network server allows the user terminal to perform uplink data transmission in terms of both access group and application type, the user terminal may send the uplink data to the network server. If the network server does not allow the user terminal to perform uplink data transmission in terms of either of the access group and the application type, the user terminal does not send the uplink data to the network server.

It should be noted that the user terminal may first determine, based on the first access control parameter, whether the network server allows the user terminal included in the access group in which the user terminal is located to perform uplink data transmission, and then perform determining based on the second access control parameter if the network server allows the user terminal included in the access group in which the user terminal is located to perform uplink data transmission. Alternatively, the user terminal may first determine, based on the second access control parameter, whether the network server allows the application type of the application that needs to be used by the user terminal to perform uplink data transmission, and then perform determining based on the first access control parameter if the network server allows the application type of the application that needs to be used by the user terminal to perform uplink data transmission. Alternatively, the user terminal may simultaneously determine, based on the first access control parameter and the second access control parameter, whether the network server allows the user terminal included in the access group in which the user terminal is located and the application type of the application that needs to be used by the user terminal to perform uplink data transmission. This embodiment of the present disclosure imposes no limitation.

For example, with reference to the first access control parameter and the second access control parameter provided in Table 1 and Table 2, it is assumed that the user terminal is located in a third access group, an application d needs to be currently used, and the application d is of an application type D. Therefore, the user terminal may determine that the user terminal in the access group can use the application d to perform uplink data transmission. In addition, assuming that the user terminal currently needs to use an application f, the user terminal may determine that the application f is of an application type F. In this case, the user terminal is not allowed to use the application f to perform uplink data transmission. If the user terminal is located in a second access group, and the application d needs to be currently used, the user terminal may determine that the access group in which the user terminal is located is not allowed to perform uplink data transmission.

Optionally, after the user terminal receives the first access control parameter and the second access control parameter, if the user terminal needs to send uplink data, the user terminal may ignore the first access control parameter based on a specific control rule, so as to determine, based on the second access control parameter, whether to perform uplink data transmission. The specific control rule may be broadcast or sent to the user terminal after being configured by the network server, or may be a default configuration of the network server and the user terminal. This embodiment of the present disclosure imposes no limitation.

Optionally, when the user terminal is in a cell forward access channel (CELL-FACH) state, a cell paging channel (CELL-PCH) state, or a UTRAN registration area paging channel (URA-PCH) state, the user terminal may receive only the second access control parameter, and then determine, based on the second access control parameter, whether the network server allows the user terminal to perform uplink data transmission.

S203. The user terminal sends uplink data to the network server.

In this embodiment of the present disclosure, when the user terminal determines, based on the first access control parameter and the second access control parameter, that the network server allows the user terminal to perform uplink data transmission in terms of both access group and application type, the user terminal sends the uplink data to the network server.

S204. The user terminal does not send uplink data to the network server.

In this embodiment of the present disclosure, when the user terminal determines, based on the first access control parameter and the second access control parameter, that the network server does not allow the user terminal to perform uplink data transmission in terms of at least one of the access group and the application type, the user terminal does not send the uplink data to the network server.

It can be understood that, that the user terminal determines, based on the first access control parameter and the second access control parameter, that the network server does not allow the user terminal to perform uplink data transmission in terms of at least one of the access group and the application type may specifically include: determining, based on the first access control parameter, that the network server does not allow the user terminal to perform uplink data transmission in the access group, but determining, based on the second access control parameter, that the network server allows the user terminal to perform uplink data transmission in the application type; determining, based on the first access control parameter, that the network server allows the user terminal to perform uplink data transmission in the access group, but determining, based on the second access control parameter, that the network server does not allow the user terminal to perform uplink data transmission in the application type; and determining, based on the first access control parameter, that the network server does not allow the user terminal to perform uplink data transmission in the access group, and determining, based on the second access control parameter, that the network server does not allow the user terminal to perform uplink data transmission in the application type.

It can be learned that in the method described in FIG. 2, after receiving, from the network server, the access control parameter that is used to control uplink data transmission of the user terminal and that includes the first access control parameter and the second access control parameter, the user terminal determines, based on the first access control parameter and the second access control parameter, whether the network server allows the user terminal to perform uplink data transmission in terms of access group and application type; and if the network server allows the user terminal to perform uplink data transmission in terms of both access group and application type, the user terminal sends the uplink data to the network server; or if the network server does not allow the user terminal to perform uplink data transmission in terms of at least one of the access group and the application type, the user terminal does not send the uplink data to the network server. In this embodiment of the present disclosure, the user terminal can receive both two types of access control parameters, and uplink data transmission of the user terminal can be controlled based on the two types of access control parameters, so that uplink data transmission of the user terminal can be controlled with reference to the access group and the application type, and uplink data transmission is precisely controlled.

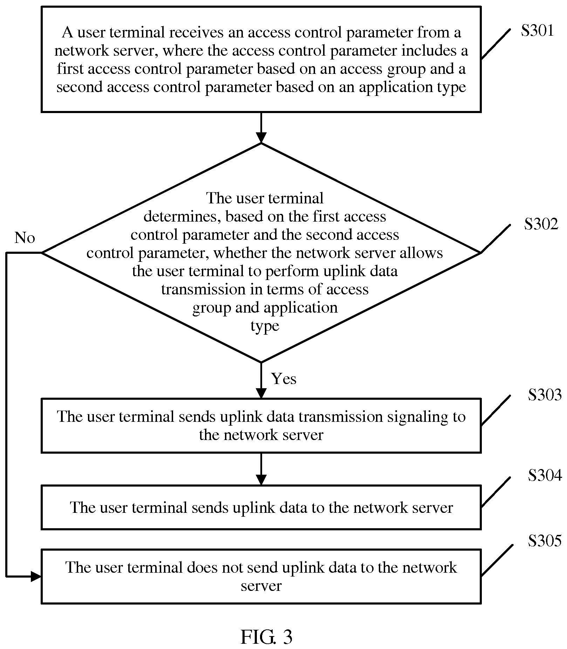

Based on the network architecture shown in FIG. 1, an embodiment of the present disclosure discloses another uplink data transmission control method. Referring to FIG. 3, FIG. 3 is a schematic flowchart of another uplink data transmission control method according to an embodiment of the present disclosure. As shown in FIG. 3, the uplink data transmission control method may include the following steps.

S301. A user terminal receives an access control parameter from a network server, where the access control parameter includes a first access control parameter based on an access group and a second access control parameter based on an application type.

S302. The user terminal determines, based on the first access control parameter and the second access control parameter, whether the network server allows the user terminal to perform uplink data transmission in terms of access group and application type; and if the network server allows the user terminal to perform uplink data transmission in terms of access group and application type, step S303 and step S304 are performed; or if the network server does not allow the user terminal to perform uplink data transmission in terms of access group and application type, step S305 is performed.

S303. The user terminal sends uplink data transmission signaling to the network server.

In this embodiment of the present disclosure, the uplink data transmission signaling may include cell update (CU) signaling or measurement report (MR) signaling; and may further include radio resource control (RRC) connection request signaling, signaling connection release indication (SCRI) signaling, uplink direct transfer (UDT) signaling, UE capability information signaling, and the like. This embodiment of the present disclosure imposes no limitation.

In this embodiment of the present disclosure, when the user terminal is in a CELL-FACH state, if the network server allows the user terminal to perform uplink data transmission, the user terminal may directly send uplink data to the network server. However, a user terminal in a CELL-PCH state or a URA-PCH state first needs to switch to a CELL-FACH state, and then can perform uplink data transmission.

Specifically, when the user terminal is in a CELL-PCH state or a URA-PCH state in seamless migration, the user terminal has a valid high speed downlink shared channel radio network temporary identifier (H-RNTI). Therefore, before sending the uplink data, the user terminal only needs to send, to the network server, MR signaling whose measurement identifier is "16" (it can be understood that content in the MR signaling whose measurement identifier is "16" is null), and then can switch to a CELL-FACH state. In addition, when the user terminal is in a CELL-PCH state or a URA-PCH state in seamed migration, before sending the uplink data, the user terminal needs to send the CU signaling to the network server, that is, the user terminal sends a data transmission request to the network server, to request to switch a state of the user terminal to a CELL-FACH state. In addition, when the user terminal is in an idle state, if the user terminal needs to send the uplink data, the user terminal needs to send the radio resource control connection request signaling to the network server. Therefore, the user terminal may send the uplink data transmission signaling to the network server after determining that the network server allows the user terminal to perform uplink data transmission in terms of both access group and application type.

It can be understood that the MR signaling is mainly used to notify the network server that the user terminal is to send uplink data. The CU signaling is mainly used to notify the network server that the user terminal needs to send uplink data, and request the network server to allow the user terminal to send the uplink data. Therefore, the network server needs to return, to the user terminal, response information indicating whether to allow the user terminal to send the uplink data, and the user terminal determines, based on the response information, whether to send the uplink data.

In a feasible implementation, when the user terminal is in a CELL-PCH state or a URA-PCH state, regardless of whether the network server allows the user terminal to perform uplink data transmission, the user terminal may receive the access control parameter from the network server after sending the uplink data transmission signaling; or may send, if the user terminal needs to perform uplink data transmission, the uplink data transmission signaling after receiving the access control parameter from the network server, and send the uplink data when determining, based on the access control parameter, that the network server allows the user terminal to perform uplink data transmission.

It should be noted that the user terminal can directly switch to a CELL-FACH state after sending the MR signaling to the network server. However, after the user terminal sends the CU signaling to the network server, the network server needs to return a message indicating that the user terminal is allowed to perform uplink data transmission, and then the user terminal can switch to a CELL-FACH state, so as to perform uplink data transmission. This embodiment of the present disclosure is mainly described in a case in which the user terminal is in a CELL-PCH or a URA-PCH state in seamless migration.

S304. The user terminal sends uplink data to the network server.

S305. The user terminal does not send uplink data transmission signaling to the network server, and does not send uplink data to the network server.

In this embodiment of the present disclosure, when the user terminal is in a CELL-PCH state or a URA-PCH state in seamless migration, and determines that the network server does not allow the user terminal to perform uplink data transmission, the user terminal sends neither the MR signaling nor the uplink data, so as to reduce unnecessary signaling and/or data sending, and reduce network resource occupation.

In a feasible implementation, when a control scope of the access control parameter that is broadcast by the network server or sent by the network server through a dedicated channel to the user terminal is merely limited to uplink data transmission, if the user terminal is in a CELL-PCH state or a URA-PCH state, and determines, based on the access control parameter, that the network server does not allow the user terminal to perform uplink data transmission, the user terminal does not send the uplink data to the network server, but may send the uplink data transmission signaling to the network server.

It can be learned that in the method described in FIG. 3, when the user terminal is in a CELL-PCH state or a URA-PCH state, the user terminal needs to send the uplink data transmission signaling to the network server, and switch to a CELL-FACH state. In addition, the user terminal can send the uplink data only when determining, based on the access control parameter, that the network server allows the user terminal to perform uplink data transmission in terms of both access group and application type. Alternatively, the user terminal sends neither the uplink data transmission signaling nor the uplink data when determining, based on the access control parameter, that the network server does not allow the user terminal to perform uplink data transmission in terms of at least one of the access group and the application type, so as to reduce unnecessary data or signaling sending, and prevent affecting network resources.

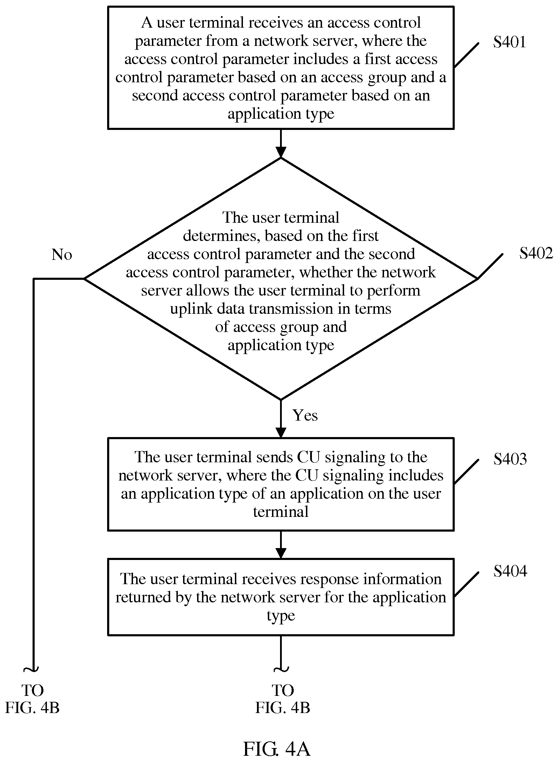

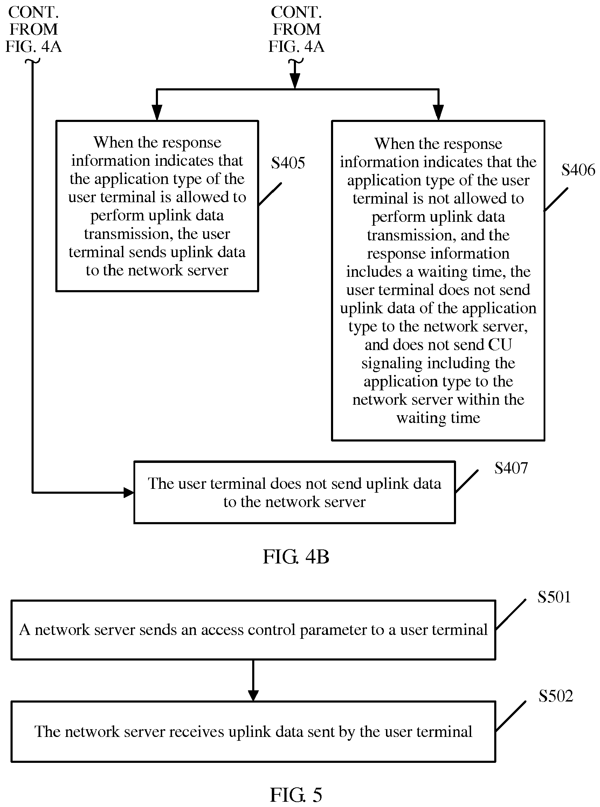

Based on the network architecture shown in FIG. 1, an embodiment of the present disclosure discloses still another uplink data transmission control method. Referring to FIG. 4A and FIG. 4B, FIG. 4A and FIG. 4B are a schematic flowchart of still another uplink data transmission control method according to an embodiment of the present disclosure. As shown in FIG. 4A and FIG. 4B, the uplink data transmission control method may include the following steps.

S401. A user terminal receives an access control parameter from a network server, where the access control parameter includes a first access control parameter based on an access group and a second access control parameter based on an application type.

S402. The user terminal determines, based on the first access control parameter and the second access control parameter, whether the network server allows the user terminal to perform uplink data transmission in terms of access group and application type; and if the network server allows the user terminal to perform uplink data transmission in terms of access group and application type, step S403 to step S406 are performed; or if the network server does not allow the user terminal to perform uplink data transmission in terms of access group and application type, step S407 is performed.

S403. The user terminal sends CU signaling to the network server, where the CU signaling includes an application type of an application on the user terminal.

In this embodiment of the present disclosure, when the user terminal is in a CELL-PCH state or a URA-PCH state in seamed migration, if the user terminal determines that the network server allows the user terminal to perform uplink data transmission in terms of both access group and application type, the user terminal needs to send the CU signaling to the network server, so as to switch to a CELL-FACH state. The CU signaling sent by the user terminal includes an application type of an application that needs to be used by the user terminal, and specifically, may directly include an application type, or may include a numerical value that represents the application type. When receiving the CU signaling, the network server may obtain, based on a numerical value, an application type of an application used by the user terminal. This embodiment of the present disclosure imposes no limitation.

It should be noted that when the user terminal is in a CELL-PCH state or a URA-PCH state in seamed migration, if the user terminal determines, based on the access control parameter, that the network server allows the user terminal to perform uplink data transmission in terms of both access group and application type, but the access control parameter that is broadcast or sent by the network server may be not updated in a timely manner, the user terminal needs to add an application type of a currently used application to the CU signaling when sending the CU signaling, so that when receiving the CU signaling, the network server determines again whether to allow the user terminal to perform uplink data transmission. In this way, uplink data transmission of the user terminal can be controlled more forcefully, and data service load of a communications network can be reduced.

S404. The user terminal receives response information returned by the network server for the application type.

In this embodiment of the present disclosure, after receiving the CU signaling sent by the user terminal, the network server may further determine whether to allow the application type included in the CU signaling to perform uplink data transmission. If the application type included in the CU signaling is allowed to perform uplink data transmission, the network server returns, to the user terminal, response information indicating that the application type of the user terminal is allowed to perform uplink data transmission; and if the application type included in the CU signaling is not allowed to perform uplink data transmission, the network server returns, to the user terminal, response information indicating that the application type of the user terminal is not allowed to perform uplink data transmission. Therefore, the user terminal receives the response information returned by the network server for the application type.

S405. When the response information indicates that the application type of the user terminal is allowed to perform uplink data transmission, the user terminal sends uplink data to the network server.

In this embodiment of the present disclosure, when the response information indicates that the application type of the application currently used by the user terminal is allowed to perform uplink data transmission, the user terminal sends the uplink data to the network server.

Optionally, the user terminal may first send the CU signaling to the network server, and after the network server returns the response information indicating that the application type of the application currently used by the user terminal is allowed to perform uplink data transmission, determine, based on the access control parameter, whether the network server allows the user terminal to perform uplink data transmission in terms of access group and application type; and when the user terminal determines that the network server allows the user terminal to perform uplink data transmission in terms of both access group and application type, the user terminal sends the uplink data.

S406. When the response information indicates that the application type of the user terminal is not allowed to perform uplink data transmission, and the response information includes a waiting time, the user terminal does not send uplink data of the application type to the network server, and does not send CU signaling including the application type to the network server within the waiting time.

In this embodiment of the present disclosure, when the response information is used to indicate that the application type of the application currently used by the user terminal is not allowed to perform uplink data transmission, the response information further includes the waiting time, and the waiting time is used to indicate that the user terminal cannot send CU signaling including the same application type to the network server within the waiting time. The waiting time is a dedicated waiting time for the application type, and is not applicable to another application type. Therefore, after receiving the returned response information, the user terminal does not send CU signaling including the application type to the network server within the waiting time, and therefore does not send the uplink data to the network server.

That is, when the response information indicates that the network server allows the application type of the user terminal to perform uplink data transmission, the response information includes a configuration parameter of the user terminal; and when the response information indicates that the network server does not allow the application type of the user terminal to perform uplink data transmission, the response information includes the waiting time.

For example, when a user terminal in a CELL-PCH state or a URA-PCH state in seamed migration needs to use an application a, the user terminal determines, based on a received access control parameter, that the network server allows an application type A of the application a to perform uplink data transmission. In this case, the user terminal may further send CU signaling to the network server, and the CU signaling includes the application type A. Therefore, when the network server receives the CU signaling, if determining that an application of the application type A is not allowed to perform uplink data transmission at this moment, the network server returns response information carrying a waiting time (for example, five minutes). Therefore, after receiving the response information, the user terminal does not send CU signaling carrying the application type A to the network server within the five minutes. However, if the user terminal determines, based on the access control parameter, that the network server allows an application type B of an application b to perform uplink data transmission, the user terminal may send CU signaling carrying the application type B to the network server.

In a feasible implementation, after receiving the response information including the waiting time, the user terminal may further perform the following step:

Step (21): The user terminal generates a random time for the response information.

Therefore, it can be understood that a specific manner in which the user terminal does not send CU signaling including the application type to the network server within the waiting time is: skipping sending the CU signaling including the application type to the network server within the random time.

In specific implementation, when the network server returns the response information including the waiting time, it may indicate that the user terminal cannot send CU signaling including the same application type within the waiting time, or may indicate that the user terminal generates a random time based on the waiting time, and cannot send CU signaling including the same application type within the random time.

Therefore, when the response information instructs the user terminal to generate a random time based on the waiting time, and cannot send CU signaling including the same application type within the random time, the user terminal may generate a random time based on the waiting time included in the response information. The random time may be less than or equal to the waiting time, or may be an integer multiple of the waiting time. This embodiment of the present disclosure imposes no limitation. The network server instructs the user terminal to generate the random time, so as to prevent a plurality of user terminals from simultaneously sending CU signaling including a same application type to the network server after the waiting time expires, and avoid congestion of a communications network. Therefore, after generating the random time for the response information, the user terminal does not send the CU signaling including the application type to the network server within the random time.

For another example, when a user terminal in a CELL-PCH state or a URA-PCH state in seamed migration needs to use an application m, the user terminal determines, based on a received access control parameter, that the network server allows an application type M of the application m to perform uplink data transmission. In this case, the user terminal may further send CU signaling to the network server, and the CU signaling includes the application type M. Therefore, when the network server receives the CU signaling, if determining that an application of the application type M is not allowed to perform uplink data transmission at this moment, the network server returns response information carrying a waiting time (for example, 10 minutes), and indicates that the user terminal may generate a random time based on the waiting time. Therefore, after the user terminal receives the response information, the user terminal generates a random time. If it is assumed that the generated random time is seven minutes, the user terminal does not send CU signaling carrying the application type M to the network server within the seven minutes. After the seven minutes expires, the user terminal may send CU signaling carrying the application type M to the network server. However, if the user terminal determines, based on the access control parameter, that the network server allows an application type N of an application n to perform uplink data transmission within the seven minutes, the user terminal may send CU signaling carrying the application type N to the network server.

S407. The user terminal does not send uplink data transmission signaling to the network server, and does not send uplink data to the network server.

It can be learned that in the method described in FIG. 4A and FIG. 4B, when the user terminal is in a CELL-PCH state or a URA-PCH state in seamed migration, and determines, based on the access control parameter, that the network server allows the user terminal to perform uplink data transmission in terms of both access group and application type, after the user terminal sends the CU signaling to the network server, if the network server returns, based on the CU signaling, the response information indicating that the application type of the user terminal is not allowed to perform uplink data transmission, the user terminal does not send CU signaling including the same application type to the network server within the waiting time included in the response information; or generates the random time based on the waiting time, and does not send CU signaling including the same application type to the network server within the random time. Therefore, congestion of a communications network caused because a plurality of user terminals simultaneously send CU signaling including a same application type after the waiting time expires can be avoided.

Based on the network architecture shown in FIG. 1, an embodiment of the present disclosure discloses yet another uplink data transmission control method. Referring to FIG. 5, FIG. 5 is a schematic flowchart of yet another uplink data transmission control method according to an embodiment of the present disclosure. As shown in FIG. 5, the uplink data transmission control method may include the following steps.

S501. A network server sends an access control parameter to a user terminal.

In this embodiment of the present disclosure, the access control parameter is used to control uplink data transmission of the user terminal. The access control parameter includes a first access control parameter based on an access group and a second access control parameter based on an application type. After receiving the access control parameter, the user terminal determines, based on the first access control parameter and the second access control parameter, whether the network server allows the user terminal to send uplink data.

It should be noted that the network server may simultaneously or asynchronously broadcast the first access control parameter and the second access control parameter to the user terminal, or may simultaneously or asynchronously send the first access control parameter and the second access control parameter to the user terminal through a dedicated channel. This embodiment of the present disclosure imposes no limitation.

S502. The network server receives uplink data sent by the user terminal.

In this embodiment of the present disclosure, if the user terminal determines that the network server allows the user terminal to send the uplink data in terms of both access group and application type, the user terminal sends the uplink data to the network server. Therefore, the network server can receive the uplink data sent by the user terminal.

In a feasible implementation, when the user terminal is in a CELL-PCH state or a URA-PCH state, the user terminal may further send uplink data transmission signaling to the network server before sending the uplink data to the network server. Therefore, before receiving the uplink data sent by the user terminal, the network server may further receive the uplink data transmission signaling sent by the user terminal. The uplink data transmission signaling may include MR signaling or CU signaling.

Further, when the user terminal sends the CU signaling to the network server, the CU signaling may include an application type of an application on the user terminal. In this case, the network server needs to determine whether to allow the application type to perform uplink data transmission, and returns response information to the user terminal for the application type. That is, if the network server allows the application type to perform uplink data transmission, the returned response information indicates that the user terminal is allowed to send the uplink data; or if the network server does not allow the application type to perform uplink data transmission, the returned response information indicates that the user terminal is not allowed to send the uplink data.

Further, when the network server does not allow the application type to perform uplink data transmission, the returned response information indicating that the application type is not allowed to perform uplink data transmission further includes a waiting time. Therefore, after receiving the response information, the user terminal does not send uplink data of the application type, and does not send, within the waiting time, CU signaling including the application type.

Further, when the network server returns the response information indicating that the application type of the application on the user terminal is not allowed to perform uplink data transmission, the response information may not only include a waiting time, to indicate that the user terminal does not send CU signaling including the application type to the network server within the waiting time, but also instruct to generate a random time within the waiting time, and not to send, to the network server within the generated random time, CU signaling including the application type.

It can be learned that in the method described in FIG. 5, the network server may broadcast or send the first access control parameter based on the access group and the second access control parameter based on the application type to the user terminal. Before the user terminal needs to perform uplink data transmission, the user terminal uses both the two types of access control parameters to determine whether to send the uplink data. In this manner, uplink data transmission of the user terminal can be controlled in terms of both access group and application type, so that uplink data transmission of the user terminal can be precisely controlled, network congestion is avoided, and network resource utilization is improved.

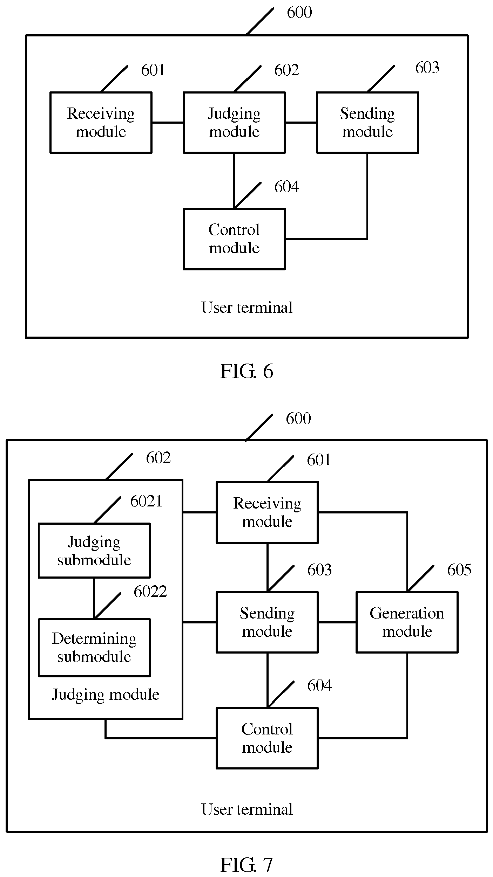

Based on the network architecture shown in FIG. 1, an embodiment of the present disclosure discloses a user terminal. Referring to FIG. 6, FIG. 6 is a schematic structural diagram of a user terminal 600 according to an embodiment of the present disclosure. As shown in FIG. 6, the user terminal 600 may include the following modules:
a receiving module 601, configured to receive an access control parameter from a network server, where the access control parameter is used to control uplink data transmission of the user terminal 600, and the access control parameter includes a first access control parameter based on an access group and a second access control parameter based on an application type;
a judging module 602, configured to determine, based on the first access control parameter and the second access control parameter, whether the network server allows the user terminal 600 to perform uplink data transmission in terms of access group and application type;
a sending module 603, configured to: when the judging module 602 determines that the network server allows the user terminal 600 to perform uplink data transmission in terms of both access group and application type, send uplink data to the network server; and
a control module 604, configured to: when the judging module 602 determines that the network server does not allow the user terminal 600 to perform uplink data transmission in terms of at least one of the access group and the application type, control the sending module 603 not to send the uplink data to the network server.

Referring to FIG. 7, FIG. 7 is a schematic structural diagram of another user terminal according to an embodiment of the present disclosure. A user terminal 600 shown in FIG. 7 is obtained by optimizing the user terminal 600 shown in FIG. 6. As shown in FIG. 7, the judging module 602 may include a judging submodule 6021 and a determining submodule 6022.

The judging submodule 6021 is configured to: determine, based on the first access control parameter, whether the network server allows a user terminal included in an access group in which the user terminal 600 is located to perform uplink data transmission; and determine, based on the second access control parameter, whether the network server allows an application type of an application on the user terminal 600 to perform uplink data transmission.

The determining submodule 6022 is configured to: when the judging submodule 6021 determines that the network server allows the user terminal included in the access group in which the user terminal 600 is located to perform uplink data transmission, and allows the application type of the application on the user terminal 600 to perform uplink data transmission, determine that the network server allows the user terminal 600 to perform uplink data transmission in terms of both access group and application type.

The determining submodule 6022 is further configured to: when the judging submodule 6021 determines that the network server does not allow the user terminal included in the access group in which the user terminal 600 is located to perform uplink data transmission, and/or does not allow the application type of the application on the user terminal 600 to perform uplink data transmission, determine that the network server does not allow the user terminal 600 to perform uplink data transmission in terms of at least one of the access group and the application type.

In a feasible implementation, the sending module 603 is further configured to: when the user terminal 600 is in a CELL-PCH state or a URA-PCH state, send uplink data transmission signaling to the network server, where the uplink data transmission signaling may include MR signaling or CU signaling.

In another feasible implementation, when the user terminal 600 is in a CELL-PCH state or a URA-PCH state, a specific manner in which the control module 604 controls the sending module 603 not to send the uplink data to the network server may be:
controlling the sending module 603 not to send the uplink data transmission signaling to the network server, and not to send the uplink data to the network server.

In this manner, when the user terminal 600 is in a CELL-PCH state or a URA-PCH state, the user terminal 600 needs to send the uplink data transmission signaling to the network server, to switch to a CELL-FACH state. The user terminal 600 can send the uplink data only when determining, based on the access control parameter, that the network server allows the user terminal 600 to perform uplink data transmission in terms of both access group and application type. Alternatively, the user terminal 600 sends neither the uplink data transmission signaling nor the uplink data when determining, based on the access control parameter, that the network server does not allow the user terminal 600 to perform uplink data transmission in terms of at least one of the access group and the application type, so as to reduce unnecessary data or signaling sending, and prevent affecting network resources.

In still another feasible implementation, when the uplink data transmission signaling includes the CU signaling, and the CU signaling further includes the application type of the application on the user terminal 600, after the sending module 603 sends the CU signaling to the network server, the receiving module 601 is triggered to receive response information returned by the network server for the application type.

In this case, a specific manner in which the sending module 603 sends the uplink data to the network server may be:
when the response information indicates that the application type of the user terminal 600 is allowed to perform uplink data transmission, and the network server allows the user terminal 600 to perform uplink data transmission in terms of both access group and application type, sending the uplink data to the network server.

In yet another feasible implementation, when the uplink data transmission signaling includes the CU signaling, and the CU signaling further includes the application type of the application on the user terminal 600, after the sending module 603 sends the CU signaling to the network server, the receiving module 601 is triggered to receive response information returned by the network server for the application type.

The control module 604 is further configured to: when the response information indicates that the application type of the user terminal 600 is not allowed to perform uplink data transmission, and the response information further includes a waiting time, control the sending module 603 not to send uplink data of the application type to the network server, and not to send CU signaling including the application type to the network server within the waiting time. The waiting time is a dedicated waiting time for the application type, and is not applicable to another application type.

In still yet another feasible implementation, the user terminal 600 may further include:
a generation module 605, configured to: when the response information indicates that the application type of the user terminal 600 is not allowed to perform uplink data transmission, and the response information further includes a waiting time, generate a random time for the response information, where the random time may be less than or equal to the waiting time, or may be an integer multiple of the waiting time.

In this case, it can be understood that a specific manner in which the control module 604 controls the sending module 603 not to send the CU signaling including the application type to the network server within the waiting time is:
controlling the sending module 603 not to send the CU signaling including the application type to the network server within the random time.

In this manner, when the user terminal 600 is in a CELL-PCH state or a URA-PCH state in seamed migration, and determines, based on the access control parameter, that the network server allows the user terminal 600 to perform uplink data transmission in terms of both access group and application type, after the user terminal 600 sends the CU signaling to the network server, if the network server returns, based on the CU signaling, the response information indicating that the application type of the user terminal 600 is not allowed to perform uplink data transmission, the user terminal 600 does not send CU signaling including the same application type to the network server within the waiting time included in the response information; or generates the random time based on the waiting time, and does not send CU signaling including the same application type to the network server within the random time. Therefore, congestion of a communications network caused because a plurality of user terminals simultaneously send CU signaling including a same application type after the waiting time expires can be avoided.

It can be learned that in the user terminal described in FIG. 6 and FIG. 7, after receiving, from the network server, the access control parameter that is used to control uplink data transmission of the user terminal and that includes the first access control parameter and the second access control parameter, the user terminal determines, based on the first access control parameter and the second access control parameter, whether the network server allows the user terminal to perform uplink data transmission in terms of access group and application type; and if the network server allows the user terminal to perform uplink data transmission in terms of both access group and application type, sends the uplink data to the network server; or if the network server does not allow the user terminal to perform uplink data transmission in terms of at least one of the access group and the application type, does not send the uplink data to the network server. In this embodiment of the present disclosure, the user terminal can receive both two types of access control parameters, and uplink data transmission of the user terminal can be controlled based on the two types of access control parameters, so that uplink data transmission of the user terminal can be controlled with reference to the access group and the application type, and uplink data transmission is precisely controlled.

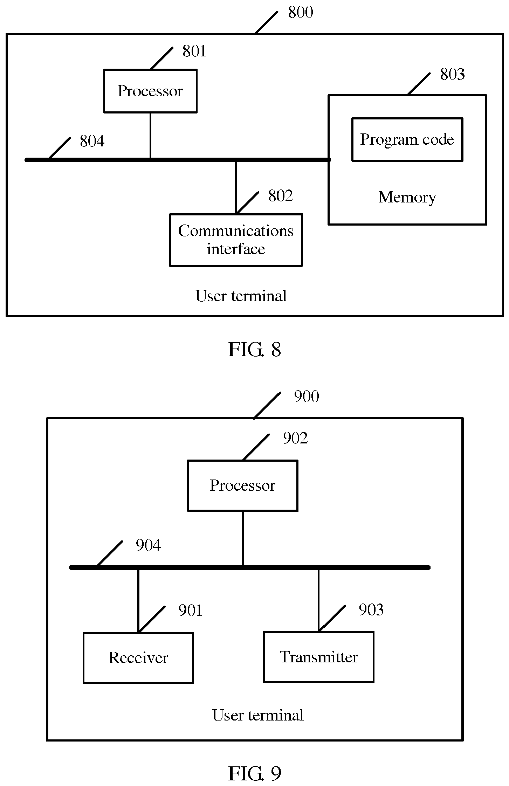

Based on the network architecture shown in FIG. 1, an embodiment of the present disclosure discloses another user terminal. Referring to FIG. 8, FIG. 8 is a schematic structural diagram of still another user terminal according to an embodiment of the present disclosure. As shown in FIG. 8, the user terminal 800 may include at least one processor 801, such as a CPU, a communications interface 802, a memory 803, and at least one communications bus 804. The memory 803 may be a high-speed RAM memory, or may be a nonvolatile memory, such as at least one magnetic disk storage. Optionally, the memory 803 may be at least one storage apparatus far away from the processor 801.

The communications bus 804 is configured to implement connection and communication between these components.

The memory 803 stores a group of program code, and the processor 801 is configured to invoke the program code stored in the memory 803, to perform the following operations:
receiving an access control parameter from a network server by using the communications interface 802, where the access control parameter is used to control uplink data transmission of the user terminal 800, and the access control parameter includes a first access control parameter based on an access group and a second access control parameter based on an application type;
determining, based on the first access control parameter and the second access control parameter, whether the network server allows the user terminal 800 to perform uplink data transmission in terms of access group and application type; and
when the network server allows the user terminal 800 to perform uplink data transmission in terms of both access group and application type, sending uplink data to the network server by using the communications interface 802; or
when the network server does not allow the user terminal 800 to perform uplink data transmission in terms of at least one of the access group and the application type, skipping sending uplink data to the network server.

In some feasible implementations, a specific manner of the determining, by the processor 801 based on the first access control parameter and the second access control parameter, whether the network server allows the user terminal 800 to perform uplink data transmission in terms of access group and application type may be:
determining, based on the first access control parameter, whether the network server allows a user terminal included in an access group in which the user terminal 800 is located to perform uplink data transmission, and determining, based on the second access control parameter, whether the network server allows an application type of an application on the user terminal 800 to perform uplink data transmission; and
when the network server allows the user terminal included in the access group in which the user terminal 800 is located to perform uplink data transmission, and allows the application type of the application on the user terminal 800 to perform uplink data transmission, determining that the network server allows the user terminal 800 to perform uplink data transmission in terms of both access group and application type; or
when the network server does not allow the user terminal included in the access group in which the user terminal 800 is located to perform uplink data transmission, and/or does not allow the application type of the application on the user terminal 800 to perform uplink data transmission, determining that the network server does not allow the user terminal 800 to perform uplink data transmission in terms of at least one of the access group and the application type.

In some feasible implementations, when the user terminal 800 is in a CELL-PCH state or a URA-PCH state, before sending the uplink data to the network server by using the communications interface 802, the processor 801 is further configured to invoke the program code stored in the memory 803, to perform the following operation:
sending uplink data transmission signaling to the network server by using the communications interface 802, where the uplink data transmission signaling includes MR signaling or CU signaling.

In some feasible implementations, when the user terminal 800 is in a CELL-PCH state or a URA-PCH state, a specific manner of the skipping sending, by the processor 801, the uplink data to the network server may be:
skipping sending the uplink data transmission signaling to the network server, and skipping sending the uplink data to the network server.

In this manner, when the user terminal 800 is in a CELL-PCH state or a URA-PCH state, the user terminal 800 needs to send the uplink data transmission signaling to the network server, to switch to a CELL-FACH state. The user terminal 800 can send the uplink data only when determining, based on the access control parameter, that the network server allows the user terminal 800 to perform uplink data transmission in terms of both access group and application type. Alternatively, the user terminal 800 sends neither the uplink data transmission signaling nor the uplink data when determining, based on the access control parameter, that the network server does not allow the user terminal 800 to perform uplink data transmission in terms of at least one of the access group and the application type, so as to reduce unnecessary data or signaling sending, and prevent affecting network resources.

In some feasible implementations, when the uplink data transmission signaling includes the CU signaling, and the CU signaling includes the application type of the application on the user terminal 800, after sending the uplink data transmission signaling to the network server by using the communications interface 802, the processor 801 is further configured to invoke the program code stored in the memory 803, to perform the following operation:
receiving, by using the communications interface 802, response information returned by the network server for the application type.

In this case, a specific manner of the sending, by the processor 801, uplink data to the network server by using the communications interface 802 may be:
when the response information indicates that the application type of the user terminal 800 is allowed to perform uplink data transmission, and the network server allows the user terminal 800 to perform uplink data transmission in terms of both access group and application type, sending the uplink data to the network server by using the communications interface 802.

In some feasible implementations, when the uplink data transmission signaling includes the CU signaling, and the CU signaling includes the application type of the application on the user terminal 800, after sending the uplink data transmission signaling to the network server by using the communications interface 802, the processor 801 is further configured to invoke the program code stored in the memory 803, to perform the following operations:
receiving, by using the communications interface 802, response information returned by the network server for the application type; and
when the response information indicates that the application type of the user terminal 800 is not allowed to perform uplink data transmission, and the response information further includes a waiting time, skipping sending uplink data of the application type to the network server, and skipping sending CU signaling including the application type to the network server within the waiting time.

In some feasible implementations, when the response information indicates that the application type of the user terminal 800 is not allowed to perform uplink data transmission, the response information further includes a waiting time. In this case, after receiving, by using the communications interface 802, the response information returned by the network server for the application type, the processor 801 is further configured to invoke the program code stored in the memory 803, to perform the following operation:
generating a random time for the response information, where the random time may be less than or equal to the waiting time, or may be an integer multiple of the waiting time.

In this case, a specific manner of the skipping sending, by the processor 801, the CU signaling including the application type to the network server within the waiting time may be:
skipping sending the CU signaling including the application type to the network server within the random time.

In this manner, when the user terminal 800 is in a CELL-PCH state or a URA-PCH state in seamed migration, and determines, based on the access control parameter, that the network server allows the user terminal 800 to perform uplink data transmission in terms of both access group and application type, after the user terminal 800 sends the CU signaling to the network server, if the network server returns, based on the CU signaling, the response information indicating that the application type of the user terminal 800 is not allowed to perform uplink data transmission, the user terminal 800 does not send CU signaling including the same application type to the network server within the waiting time included in the response information; or generates the random time based on the waiting time, and does not send CU signaling including the same application type to the network server within the random time. Therefore, congestion of a communications network caused because a plurality of user terminals simultaneously send CU signaling including a same application type after the waiting time expires can be avoided.

It can be learned that in the user terminal described in FIG. 8, after receiving, from the network server, the access control parameter that is used to control uplink data transmission of the user terminal and that includes the first access control parameter and the second access control parameter, the user terminal determines, based on the first access control parameter and the second access control parameter, whether the network server allows the user terminal to perform uplink data transmission in terms of access group and application type; and if the network server allows the user terminal to perform uplink data transmission in terms of both access group and application type, sends the uplink data to the network server; or if the network server does not allow the user terminal to perform uplink data transmission in terms of at least one of the access group and the application type, does not send the uplink data to the network server. In this embodiment of the present disclosure, the user terminal can receive both two types of access control parameters, and uplink data transmission of the user terminal can be controlled based on the two types of access control parameters, so that uplink data transmission of the user terminal can be controlled with reference to the access group and the application type, and uplink data transmission is precisely controlled.

Based on the network architecture shown in FIG. 1, an embodiment of the present disclosure discloses still another user terminal. Referring to FIG. 9, FIG. 9 is a schematic structural diagram of yet another user terminal according to an embodiment of the present disclosure. As shown in FIG. 9, the user terminal 900 may include a receiver 901, at least one processor 902, such as a CPU, a transmitter 903, and at least one bus 904.

The bus 904 may be a communications bus, and is configured to implement connection and communication between the receiver 901, the processor 902, and the transmitter 903. This embodiment of the present disclosure imposes no limitation.

The receiver 901 is configured to receive an access control parameter from a network server, where the access control parameter is used to control uplink data transmission of the user terminal 900, and the access control parameter includes a first access control parameter based on an access group and a second access control parameter based on an application type.

The processor 902 is configured to determine, based on the first access control parameter and the second access control parameter, whether the network server allows the user terminal 900 to perform uplink data transmission in terms of access group and application type.

The transmitter 903 is configured to: when the network server allows the user terminal 900 to perform uplink data transmission in terms of both access group and application type, send uplink data to the network server.

The processor 902 is further configured to: when the network server does not allow the user terminal 900 to perform uplink data transmission in terms of at least one of the access group and the application type, control the transmitter 903 not to send uplink data to the network server.

In some feasible implementations, a specific manner in which the processor 902 determines, based on the first access control parameter and the second access control parameter, whether the network server allows the user terminal 900 to perform uplink data transmission in terms of access group and application type may be:
determining, based on the first access control parameter, whether the network server allows a user terminal included in an access group in which the user terminal 900 is located to perform uplink data transmission, and determining, based on the second access control parameter, whether the network server allows an application type of an application on the user terminal 900 to perform uplink data transmission; and
when the network server allows the user terminal included in the access group in which the user terminal 900 is located to perform uplink data transmission, and allows the application type of the application on the user terminal 900 to perform uplink data transmission, determining that the network server allows the user terminal 900 to perform uplink data transmission in terms of both access group and application type; or
when the network server does not allow the user terminal included in the access group in which the user terminal 900 is located to perform uplink data transmission, and/or does not allow the application type of the application on the user terminal 900 to perform uplink data transmission, determining that the network server does not allow the user terminal 900 to perform uplink data transmission in terms of at least one of the access group and the application type.

In some feasible implementations, the transmitter 903 is further configured to: when the user terminal 900 is in a CELL-PCH state or a URA-PCH state, send uplink data transmission signaling to the network server, where the uplink data transmission signaling includes MR signaling or CU signaling.

In some feasible implementations, when the user terminal 900 is in a CELL-PCH state or a URA-PCH state, a specific manner in which the processor 902 controls the transmitter 903 not to send the uplink data to the network server may be:
controlling the transmitter 903 not to send the uplink data transmission signaling to the network server, and not to send the uplink data to the network server.

In this manner, when the user terminal 900 is in a CELL-PCH state or a URA-PCH state, the user terminal 900 needs to send the uplink data transmission signaling to the network server, to switch to a CELL-FACH state. The user terminal 900 can send the uplink data only when determining, based on the access control parameter, that the network server allows the user terminal 900 to perform uplink data transmission in terms of both access group and application type. Alternatively, the user terminal 900 sends neither the uplink data transmission signaling nor the uplink data when determining, based on the access control parameter, that the network server does not allow the user terminal 900 to perform uplink data transmission in terms of at least one of the access group and the application type, so as to reduce unnecessary data or signaling sending, and prevent affecting network resources.

In some feasible implementations, the receiver 901 is further configured to: when the uplink data transmission signaling includes the CU signaling, and the CU signaling includes the application type of the application on the user terminal 900, receive response information returned by the network server for the application type.

In this case, a specific manner in which the transmitter 903 sends the uplink data to the network server may be:
when the response information indicates that the application type of the user terminal 900 is allowed to perform uplink data transmission, and the network server allows the user terminal 900 to perform uplink data transmission in terms of both access group and application type, sending the uplink data to the network server.

In some feasible implementations, the receiver 901 is further configured to: when the uplink data transmission signaling includes the CU signaling, and the CU signaling includes the application type of the application on the user terminal 900, receive response information returned by the network server for the application type.

In this case, the processor 902 is further configured to: when the response information indicates that the application type of the user terminal 900 is not allowed to perform uplink data transmission, and the response information further includes a waiting time, control the transmitter 903 not to send uplink data of the application type to the network server, and not to send CU signaling including the application type to the network server within the waiting time.

In some feasible implementations, the processor 902 is further configured to: when the response information indicates that the application type of the user terminal 900 is not allowed to perform uplink data transmission, and the response information further includes a waiting time, generate a random time for the response information, where the random time may be less than or equal to the waiting time, or may be an integer multiple of the waiting time.

In this case, a specific manner in which the processor 902 controls the transmitter 903 not to send the CU signaling including the application type to the network server within the waiting time may be:
controlling the transmitter 903 not to send the CU signaling including the application type to the network server within the random time.

In this manner, when the user terminal 900 is in a CELL-PCH state or a URA-PCH state in seamed migration, and determines, based on the access control parameter, that the network server allows the user terminal 900 to perform uplink data transmission in terms of both access group and application type, after the user terminal 900 sends the CU signaling to the network server, if the network server returns, based on the CU signaling, the response information indicating that the application type of the user terminal 900 is not allowed to perform uplink data transmission, the user terminal 900 does not send CU signaling including the same application type to the network server within the waiting time included in the response information; or generates the random time based on the waiting time, and does not send CU signaling including the same application type to the network server within the random time. Therefore, congestion of a communications network caused because a plurality of user terminals simultaneously send CU signaling including a same application type after the waiting time expires can be avoided.

It can be learned that in the user terminal described in FIG. 9, after receiving, from the network server, the access control parameter that is used to control uplink data transmission of the user terminal and that includes the first access control parameter and the second access control parameter, the user terminal determines, based on the first access control parameter and the second access control parameter, whether the network server allows the user terminal to perform uplink data transmission in terms of access group and application type; and if the network server allows the user terminal to perform uplink data transmission in terms of both access group and application type, sends the uplink data to the network server; or if the network server does not allow the user terminal to perform uplink data transmission in terms of at least one of the access group and the application type, does not send the uplink data to the network server. In this embodiment of the present disclosure, the user terminal can receive both two types of access control parameters, and uplink data transmission of the user terminal can be controlled based on the two types of access control parameters, so that uplink data transmission of the user terminal can be controlled with reference to the access group and the application type, and uplink data transmission is precisely controlled.

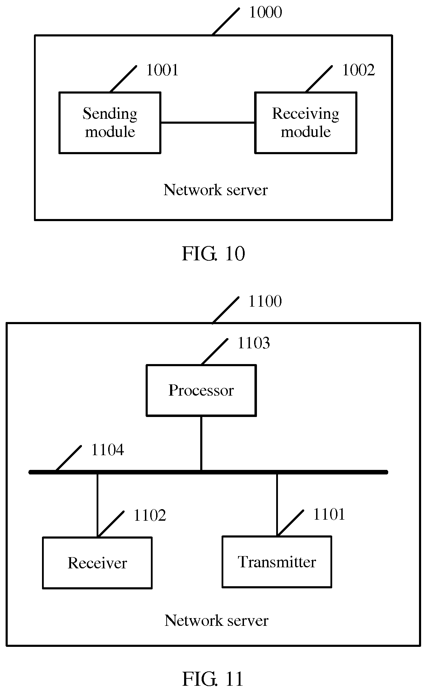

Based on the network architecture shown in FIG. 1, an embodiment of the present disclosure discloses a network server. Referring to FIG. 10, FIG. 10 is a schematic structural diagram of a network server according to an embodiment of the present disclosure. As shown in FIG. 10, the network server 1000 may include the following modules:
a sending module 1001, configured to send an access control parameter to a user terminal, where the access control parameter is used to control uplink data transmission of the user terminal, and the access control parameter includes a first access control parameter based on an access group and a second access control parameter based on an application type; and
a receiving module 1002, configured to receive uplink data sent by the user terminal, where the uplink data is sent by the user terminal to the network server 1000 after the user terminal determines, based on the first access control parameter and the second access control parameter, that the network server 1000 allows the user terminal to send the uplink data.

In a feasible implementation, before receiving the uplink data sent by the user terminal, the receiving module 1002 may be further configured to receive uplink data transmission signaling sent by the user terminal, where the uplink data transmission signaling may include MR signaling or CU signaling. The uplink data transmission signaling is sent when the user terminal is in a CELL-PCH state or a URA-PCH state, and needs to perform uplink data transmission.

Further, when the receiving module 1002 receives CU signaling that is sent by the user terminal and that carries an application type, the network server 1000 needs to determine whether the application type is allowed to perform uplink data transmission. The sending module 1001 needs to return response information to the user terminal for the application type. That is, if the network server 1000 allows the application type to perform uplink data transmission, the response information returned by the sending module 1001 indicates that the user terminal is allowed to send the uplink data; or if the network server 1000 does not allow the application type to perform uplink data transmission, the response information returned by the sending module 1001 indicates that the user terminal is not allowed to send the uplink data.

Further, when the network server 1000 does not allow the application type to perform uplink data transmission, the response information, returned by the sending module 1001, indicating that the application type is not allowed to perform uplink data transmission further includes a waiting time. In this case, after receiving the response information, the user terminal does not send, within the waiting time, CU signaling including the application type, and does not send uplink data of the application type.

It can be learned that in the network server described in FIG. 10, the network server may broadcast or send the first access control parameter based on the access group and the second access control parameter based on the application type to the user terminal. Before the user terminal needs to perform uplink data transmission, the user terminal uses both the two types of access control parameters to determine whether to send the uplink data. In this manner, uplink data transmission of the user terminal can be controlled in terms of both access group and application type, so that uplink data transmission of the user terminal can be precisely controlled, network congestion is avoided, and network resource utilization is improved.

Based on the network architecture shown in FIG. 1, an embodiment of the present disclosure discloses a network server. Referring to FIG. 11, FIG. 11 is a schematic structural diagram of another network server according to an embodiment of the present disclosure. As shown in FIG. 11, the network server 1100 may include a transmitter 1101, a receiver 1102, at least one processor 1103, and at least one bus 1104.

The bus 1104 may be a communications bus, and is configured to implement connection and communication between the transmitter 1101, the receiver 1102, and the processor 1103. This embodiment of the present disclosure imposes no limitation.

It should be noted that the sending module 1001 in the network server 1000 disclosed in FIG. 10 is corresponding to the transmitter 1101 in the network server 1100 disclosed in this embodiment, and the receiving module 1002 is corresponding to the receiver 1102. The transmitter 1101 is configured to perform a same operation as the sending module 1001, and the receiver 1102 is configured to perform a same operation as the receiving module 1002. Details are not described in this embodiment of the present disclosure.

That is, the transmitter 1101 may be configured to send an access control parameter to a user terminal.

The receiver 1102 may be configured to: after the user terminal determines, based on the access control parameter, that the network server allows the user terminal to perform uplink data transmission in terms of both access group and application type, receive uplink data sent by the user terminal.

In addition, when the user terminal is in a CELL-PCH state or a URA-PCH state, and needs to perform uplink data transmission, the receiver 1102 may further receive uplink data transmission signaling sent by the user terminal.

When the uplink data transmission signaling is CU signaling, and the CU signaling carries an application type of an application on the user terminal, the transmitter 1101 may further send response information to the user terminal for the application type. The response information may indicate that the application type is allowed to perform uplink data transmission, or may indicate that the application type is not allowed to perform uplink data transmission.

In this embodiment of the present disclosure, the processor 1103 is mainly configured to: when the receiver 1102 receives the CU signaling sent by the user terminal, determine, for the application type carried in the CU signaling and based on an existing uplink data transmission control policy, whether the application type is allowed to perform uplink data transmission. If the application type is allowed to perform uplink data transmission, the transmitter 1101 is triggered to send, to the user terminal, response information indicating that uplink data transmission is allowed; or if the application type is not allowed to perform uplink data transmission, the transmitter 1101 is triggered to send, to the user terminal, response information indicating that uplink data transmission is not allowed.

It can be learned that in the network server described in FIG. 11, the network server may broadcast or send, to the user terminal, a first access control parameter based on an access group and a second access control parameter based on an application type. Before the user terminal needs to perform uplink data transmission, the user terminal uses both the two types of access control parameters to determine whether to send the uplink data. In this manner, uplink data transmission of the user terminal can be controlled in terms of both access group and application type, so that uplink data transmission of the user terminal can be precisely controlled, network congestion is avoided, and network resource utilization is improved.

It should be noted that, in the foregoing embodiments, the description of each embodiment has respective focuses. For a part that is not described in detail in an embodiment, reference may be made to related descriptions in other embodiments. In addition, a person skilled in the art should also appreciate that all the embodiments described in the specification are embodiments, and the related actions and modules are not necessarily mandatory to the present disclosure.

Steps in the uplink data transmission control method in the embodiments of the present disclosure may be sequentially adjusted, combined, and deleted based on a practical requirement.

The modules in the user terminal and the network server in the embodiments of the present disclosure may be combined, divided, or deleted based on an actual requirement.

The modules of the embodiments of the present disclosure may be executed by a universal integrated circuit, such as a central processing unit (CPU) or an application specific integrated circuit (ASIC).

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM), or a random access memory (RAM).

The uplink data transmission control method, the user terminal, and the network server are described in detail in the embodiments of the present disclosure. Specific examples are used in this specification to describe the principle and implementations of the present disclosure. The descriptions of the foregoing embodiments are merely intended to help understand the method and idea of the present disclosure. In addition, with respect to the implementations and the application scope, modifications may be made by a person of ordinary skill in the art according to the idea of the present disclosure. Therefore, this specification shall not be construed as a limitation on the present disclosure.

## Claims

1. An uplink data transmission control method, **characterized in** comprising:
receiving (S201), by a user terminal, an access control parameter from a network server, wherein the access control parameter is used to control uplink data transmission of the user terminal, and the access control parameter comprises a first access control parameter based on an access group and a second access control parameter based on an application type;
determining (S202), by the user terminal based on the first access control parameter and the second access control parameter, whether the network server allows the user terminal to perform uplink data transmission in terms of access group and application type; and
when the network server allows the user terminal to perform uplink data transmission in terms of both access group and application type, sending (S203), by the user terminal, uplink data to the network server; or
when the network server does not allow the user terminal to perform uplink data transmission in terms of at least one of the access group and the application type, skipping sending (S204), by the user terminal, uplink data to the network server;
wherein when the user terminal is in a cell paging channel, CELL-PCH, state or a UTRAN registration area paging channel, URA-PCH, state, before the sending, by the user terminal, uplink data to the network server, the method further comprises:
sending, by the user terminal, uplink data transmission signaling to the network server, wherein the uplink data transmission signaling comprises measurement report, MR, signaling or cell update, CU, signaling; and
wherein when the uplink data transmission signaling comprises the CU signaling, and the CU signaling comprises the application type of the application on the user terminal, after the sending, by the user terminal, uplink data transmission signaling to the network server, the method further comprises:
receiving, by the user terminal, response information returned by the network server for the application type; and
a specific manner of the sending, by the user terminal, uplink data to the network server is:
when the response information indicates that the application type of the user terminal is allowed to perform uplink data transmission, and the network server allows the user terminal to perform uplink data transmission in terms of both access group and application type, sending, by the user terminal, the uplink data to the network server.

2. The method according to claim 1, wherein the determining, by the user terminal based on the first access control parameter and the second access control parameter, whether the network server allows the user terminal to perform uplink data transmission in terms of access group and application type comprises:
determining, by the user terminal based on the first access control parameter, whether the network server allows a user terminal comprised in an access group in which the user terminal is located to perform uplink data transmission, and determining, based on the second access control parameter, whether the network server allows an application type of an application on the user terminal to perform uplink data transmission; and
when the network server allows the user terminal comprised in the access group in which the user terminal is located to perform uplink data transmission, and allows the application type of the application on the user terminal to perform uplink data transmission, determining, by the user terminal, that the network server allows the user terminal to perform uplink data transmission in terms of both access group and application type; or
when the network server does not allow the user terminal comprised in the access group in which the user terminal is located to perform uplink data transmission, and/or does not allow the application type of the application on the user terminal to perform uplink data transmission, determining, by the user terminal, that the network server does not allow the user terminal to perform uplink data transmission in terms of at least one of the access group and the application type.

3. The method according to claim 1 or 2, wherein when the user terminal is in a cell paging channel, CELL-PCH, state or a UTRAN registration area paging channel, URA-PCH, state, the skipping sending, by the user terminal, the uplink data to the network server comprises:
skipping sending, by the user terminal, uplink data transmission signaling to the network server, and skipping sending the uplink data to the network server.

4. The method according to claim 1, wherein when the uplink data transmission signaling comprises the CU signaling, and the CU signaling comprises the application type of the application on the user terminal, after the sending, by the user terminal, uplink data transmission signaling to the network server, the method further comprises:
receiving, by the user terminal, response information returned by the network server for the application type; and
when the response information indicates that the application type of the user terminal is not allowed to perform uplink data transmission, and the response information further comprises a waiting time for the application type, skipping sending, by the user terminal, uplink data of the application type to the network server, and skipping sending CU signaling comprising the application type to the network server within the waiting time.

5. An uplink data transmission control method, **characterized in** comprising:
sending (S501), by a network server, an access control parameter to a user terminal, wherein the access control parameter is used to control uplink data transmission of the user terminal, and the access control parameter comprises a first access control parameter based on an access group and a second access control parameter based on an application type; and
receiving (S502), by the network server, uplink data sent by the user terminal, wherein the uplink data is sent by the user terminal to the network server after the user terminal determines, based on the first access control parameter and the second access control parameter, that the network server allows the user terminal to perform uplink data transmission;
wherein the method before the receiving (S502) uplink data sent by the user terminal further contains
receiving, by the network server, uplink data transmission signaling sent by the user terminal, the uplink data transmission signaling comprising measurement report, MR, signaling or cell update, CU, signaling;
determining, by the network server, when network server received CU signaling, the CU signaling comprising an application type of an application on the user terminal, whether to allow the application type to perform uplink data transmission; and
returning, by the network server, if the network server determined that performing data transmission is allowed for the application type, response information to the user terminal for the application type allowing the user terminal to perform uplink data transmission.

6. A user terminal, **characterized in** comprising:
a receiving module (601), configured to receive an access control parameter from a network server, wherein the access control parameter is used to control uplink data transmission of the user terminal, and the access control parameter comprises a first access control parameter based on an access group and a second access control parameter based on an application type;
a judging module (602), configured to determine, based on the first access control parameter and the second access control parameter, whether the network server allows the user terminal to perform uplink data transmission in terms of access group and application type;
a sending module (603), configured to: when the judging module determines that the network server allows the user terminal to perform uplink data transmission in terms of both access group and application type, send uplink data to the network server; and
a control module (604), configured to: when the judging module determines that the network server does not allow the user terminal to perform uplink data transmission in terms of at least one of the access group and the application type, control the sending module not to send uplink data to the network server;
wherein the sending module (603) is further configured to: when the user terminal is in a cell paging channel, CELL-PCH, state or a UTRAN registration area paging channel, URA-PCH, state, send uplink data transmission signaling to the network server, wherein the uplink data transmission signaling comprises measurement report, MR, signaling or cell update, CU, signaling;
the receiving module (601) is further configured to: when the uplink data transmission signaling comprises the CU signaling, and the CU signaling comprises the application type of the application on the user terminal, receive response information returned by the network server for the application type; and
the sending module (603) is configured to send the uplink data to the network server by:
when the response information indicates that the application type of the user terminal is allowed to perform uplink data transmission, and the network server allows the user terminal to perform uplink data transmission in terms of both access group and application type, sending the uplink data to the network server.

7. The user terminal according to claim 6, wherein the judging module (602) comprises a judging submodule (6021) and a determining submodule (6022), wherein
the judging submodule (6021) is configured to: determine, based on the first access control parameter, whether the network server allows a user terminal comprised in an access group in which the user terminal is located to perform uplink data transmission; and determine, based on the second access control parameter, whether the network server allows an application type of an application on the user terminal to perform uplink data transmission;
the determining submodule (6022) is configured to: when the judging submodule determines that the network server allows the user terminal comprised in the access group in which the user terminal is located to perform uplink data transmission, and allows the application type of the application on the user terminal to perform uplink data transmission, determine that the network server allows the user terminal to perform uplink data transmission in terms of both access group and application type; and
the determining submodule (6022) is further configured to: when the judging submodule determines that the network server does not allow the user terminal comprised in the access group in which the user terminal is located to perform uplink data transmission, and/or does not allow the application type of the application on the user terminal to perform uplink data transmission, determine that the network server does not allow the user terminal to perform uplink data transmission in terms of at least one of the access group and the application type.

8. The user terminal according to claim 6 or 7, wherein the control module (604) is configured to control the sending module (603) not to send the uplink data to the network server by:
when the user terminal is in a cell paging channel, CELL-PCH, state or a UTRAN registration area paging channel, URA-PCH, state, controlling the sending module (603) not to send the uplink data transmission signaling to the network server, and not to send the uplink data to the network server.

9. The user terminal according to claim 6, wherein
the receiving module (601) is further configured to: when the uplink data transmission signaling comprises the CU signaling, and the CU signaling comprises the application type of the application on the user terminal, receive response information returned by the network server for the application type; and
the control module (604) is further configured to: when the response information indicates that the application type of the user terminal is not allowed to perform uplink data transmission, and the response information further comprises a waiting time, control the sending module (603) not to send uplink data of the application type to the network server, and not to send CU signaling comprising the application type to the network server within the waiting time.

10. The user terminal according to claim 9, wherein the user terminal further comprises:
a generation module (605), configured to generate a random time for the response information, wherein the random time is less than or equal to the waiting time; and
the control module (604) is configured to control the sending module (603) not to send the CU signaling comprising the application type to the network server within the waiting time by:
controlling the sending module (603) not to send the CU signaling comprising the application type to the network server within the random time.

11. A network server, **characterized in** comprising:
a sending module (1001), configured to send an access control parameter to a user terminal, wherein the access control parameter is used to control uplink data transmission of the user terminal, and the access control parameter comprises a first access control parameter based on an access group and a second access control parameter based on an application type; and
a receiving module (1002), configured to receive uplink data sent by the user terminal, wherein the uplink data is sent by the user terminal to the network server after the user terminal determines, based on the first access control parameter and the second access control parameter, that the network server allows the user terminal to perform uplink data transmission;
wherein the receiving module (1002) is further configured to receive, before the receiving uplink data sent by the user terminal, uplink data transmission signaling sent by the user terminal, the uplink data transmission signaling comprising measurement report, MR, signaling or cell update, CU, signaling;
the network server is configured to determine, when the receiving module (1002) received CU signaling, and the CU signaling comprises an application type of an application on the user terminal, whether to allow the application type to perform uplink data transmission; and
the sending module (1001) is further configured to return, if the network server determined that performing data transmission is allowed for the application type, response information to the user terminal for the application type allowing the user terminal to perform uplink data transmission.

## Patentansprüche

1. Uplink-Datenübertragungsverfahren, **dadurch gekennzeichnet, dass** es Folgendes umfasst:
Empfangen (S201), durch ein Benutzergerät, eines Zugangssteuerungsparameters von einem Netzserver wobei der Zugangssteuerungsparameter verwendet wird zum Steuern einer Uplink-Datenübertragung des Benutzergeräts und der Zugangssteuerungsparameter einen ersten Zugangssteuerungsparameter, basierend auf einer Zugangsgruppe, und einen zweiten Zugangssteuerungsparameter, basierend auf einer Anwendungsart, umfasst;
Bestimmen (S202), durch das Benutzergerät, basierend auf dem ersten Zugangssteuerungsparameter und dem zweiten Zugangssteuerungsparameter, ob der Netzserver dem Benutzergerät erlaubt, hinsichtlich der Zugangsgruppe und der Anwendungsart Uplink-Datenübertragung durchzuführen; und
wenn der Netzserver dem Benutzergerät erlaubt, hinsichtlich sowohl der Zugangsgruppe als auch der Anwendungsart Uplink-Datenübertragung durchzuführen, Senden (S203), durch das Benutzergerät, von Uplink-Daten an den Netzserver; oder
wenn der Netzserver dem Benutzergerät nicht erlaubt, hinsichtlich der Zugangsgruppe und/oder der Anwendungsart Uplink-Datenübertragung durchzuführen, Überspringen des Sendens (S204), durch das Benutzergerät, von Uplink-Daten an den Netzserver;
wobei, wenn sich das Benutzergerät in einem Zellen-Pagingkanal-Zustand bzw. CELL-PCH-Zustand oder einem UTRAN-Registrierungsgebiet-Pagingkanal-Zustand bzw. URA-PCH-Zustand befindet, vor dem Senden, durch das Benutzergerät, von Uplink-Daten an den Netzserver, das Verfahren ferner Folgendes umfasst:
Senden, durch das Benutzergerät, von Uplink-Datenübertragungssignalisierung an den Netzserver, wobei die Uplink-Datenübertragungssignalisierung eine Messberichtssignalisierung bzw. MR-Signalisierung oder Zellenaktualisierungssignalisierung bzw. CU-Signalisierung umfasst; und
wobei, wenn die Uplink-Datenübertragungssignalisierung die CU-Signalisierung umfasst und die CU-Signalisierung die Anwendungsart der Anwendung auf dem Benutzergerät umfasst, nach dem Senden, durch das Benutzergerät, von Uplink-Datenübertragungssignalisierung an den Netzserver, das Verfahren ferner Folgendes umfasst:
Empfangen, durch das Benutzergerät, von durch den Netzserver zurückgeschickten Antwortinformationen für die Anwendungsart; und
eine spezifische Weise des Sendens, durch das Benutzergerät, von Uplink-Daten an den Netzserver ist folgendermaßen:
wenn die Antwortinformationen angeben, dass der Anwendungsart des Benutzergeräts erlaubt ist, Uplink-Datenübertragung durchzuführen, und der Netzserver dem Benutzergerät erlaubt, hinsichtlich sowohl der Zugangsgruppe als auch der Anwendungsart Uplink-Datenübertragung durchzuführen, Senden, durch das Benutzergerät, der Uplink-Daten an den Netzserver.

2. Verfahren nach Anspruch 1, wobei das Bestimmen, durch das Benutzergerät, basierend auf dem ersten Zugangssteuerungsparameter und dem zweiten Zugangssteuerungsparameter, ob der Netzserver dem Benutzergerät erlaubt, hinsichtlich der Zugangsgruppe und der Anwendungsart Uplink-Datenübertragung durchzuführen, Folgendes umfasst:
Bestimmen, durch das Benutzergerät, basierend auf dem ersten Zugangssteuerungsparameter, ob der Netzserver einem Benutzergerät, das in einer Zugangsgruppe, in welcher sich das Benutzergerät befindet, enthalten ist, erlaubt, Uplink-Datenübertragung durchzuführen, und Bestimmen, basierend auf dem zweiten Zugangssteuerungsparameter, ob der Netzserver einer Anwendungsart einer Anwendung auf dem Benutzergerät erlaubt, Uplink-Datenübertragung durchzuführen; und
wenn der Netzserver dem Benutzergerät, das in der Zugangsgruppe, in welcher sich das Benutzergerät befindet, enthalten ist, erlaubt, Uplink-Datenübertragung durchzuführen, und der Anwendungsart der Anwendung auf dem Benutzergerät erlaubt, Uplink-Datenübertragung durchzuführen, Bestimmen, durch das Benutzergerät, dass der Netzserver dem Benutzergerät erlaubt, hinsichtlich sowohl der Zugangsgruppe als auch der Anwendungsart Uplink-Datenübertragung durchzuführen; oder
wenn der Netzserver dem Benutzergerät, das in der Zugangsgruppe, in welcher sich das Benutzergerät befindet, enthalten ist, nicht erlaubt, Uplink-Datenübertragung durchzuführen, und/oder der Anwendungsart der Anwendung auf dem Benutzergerät nicht erlaubt, Uplink-Datenübertragung durchzuführen, Bestimmen, durch das Benutzergerät, dass der Netzserver dem Benutzergerät nicht erlaubt, hinsichtlich der Zugangsgruppe und/oder der Anwendungsart Uplink-Datenübertragung durchzuführen.

3. Verfahren nach Anspruch 1 oder 2, wobei, wenn sich das Benutzergerät in einem Zellen-Pagingkanal-Zustand bzw. CELL-PCH-Zustand oder einem UTRAN-Registrierungsgebiet-Pagingkanal-Zustand bzw. URA-PCH-Zustand befindet, das Überspringen des Sendens, durch das Benutzergerät, der Uplink-Daten an den Netzserver, Folgendes umfasst:
Überspringen des Sendens, durch das Benutzergerät, von Uplink-Datenübertragungssignalisierung an den Netzserver und Überspringen des Sendens der Uplink-Daten an den Netzserver.

4. Verfahren nach Anspruch 1, wobei, wenn die Uplink-Datenübertragungssignalisierung die CU-Signalisierung umfasst und die CU-Signalisierung die Anwendungsart der Anwendung auf dem Benutzergerät umfasst, nach dem Senden, durch das Benutzergerät, von Uplink-Datenübertragungssignalisierung an den Netzserver, das Verfahren ferner Folgendes umfasst:
Empfangen, durch das Benutzergerät, von durch den Netzserver zurückgeschickten Antwortinformationen für die Anwendungsart; und
wenn die Antwortinformationen angeben, dass der Anwendungsart des Benutzergeräts nicht erlaubt ist, Uplink-Datenübertragung durchzuführen, und die Antwortinformationen ferner eine Wartezeit für die Anwendungsart umfassen, Überspringen des Sendens, durch das Benutzergerät, von Uplink-Daten der Anwendungsart an den Netzserver und Überspringen von CU-Signalisierung, die die Anwendungsart umfasst, an den Netzserver innerhalb der Wartezeit.

5. Uplink-Datenübertragungsverfahren, **dadurch gekennzeichnet, dass** es Folgendes umfasst:
Senden (S501), durch einen Netzserver, eines Zugangssteuerungsparameters an ein Benutzergerät, wobei der Zugangssteuerungsparameter verwendet wird zum Steuern einer Uplink-Datenübertragung des Benutzergeräts und der Zugangssteuerungsparameter einen ersten Zugangssteuerungsparameter, basierend auf einer Zugangsgruppe, und einen zweiten Zugangssteuerungsparameter, basierend auf einer Anwendungsart, umfasst;
Empfangen (S502), durch den Netzserver, von durch das Benutzergerät gesendeten Uplink-Daten, wobei die Uplink-Daten durch das Benutzergerät an den Netzserver gesendet werden, nachdem das Benutzergerät bestimmt hat, basierend auf dem ersten Zugangssteuerungsparameter und dem zweiten Zugangssteuerungsparameter, dass der Netzserver dem Benutzergerät erlaubt, Uplink-Datenübertragung durchzuführen;
wobei das Verfahren vor dem Empfangen (S502) von durch das Benutzergerät gesendeten Uplink-Daten ferner Folgendes enthält:
Empfangen, durch den Netzserver, von durch das Benutzergerät gesendeter Uplink-Datenübertragungssignalisierung, wobei die Uplink-Datenübertragungssignalisierung eine Messberichtssignalisierung bzw. MR-Signalisierung oder Zellenaktualisierungssignalisierung bzw. CU-Signalisierung umfasst;
Bestimmen, durch den Netzserver, wenn der Netzserver CU-Signalisierung empfangen hat wobei die CU-Signalisierung eine Anwendungsart einer Anwendung auf dem Benutzergerät umfasst, ob der Anwendungsart erlaubt werden soll, Uplink-Datenübertragung durchzuführen; und
Zurückschicken, durch den Netzserver, falls der Netzserver bestimmt, dass Durchführen von Datenübertragung für die Anwendungsart erlaubt ist, von Antwortinformationen an das Benutzergerät, um dem Benutzergerät für die Anwendungsart zu erlauben, Uplink-Datenübertragung durchzuführen.

6. Benutzergerät, **dadurch gekennzeichnet, dass** es Folgendes umfasst:
ein Empfangsmodul (601), ausgelegt zum Empfangen eines Zugangssteuerungsparameters von einem Netzserver, wobei der Zugangssteuerungsparameter verwendet wird zum Steuern einer Uplink-Datenübertragung des Benutzergeräts und der Zugangssteuerungsparameter einen ersten Zugangssteuerungsparameter, basierend auf einer Zugangsgruppe, und einen zweiten Zugangssteuerungsparameter, basierend auf einer Anwendungsart, umfasst;
ein Beurteilungsmodul (602), ausgelegt zum Bestimmen, basierend auf dem ersten Zugangssteuerungsparameter und dem zweiten Zugangssteuerungsparameter, ob der Netzserver dem Benutzergerät erlaubt, hinsichtlich der Zugangsgruppe und der Anwendungsart Uplink-Datenübertragung durchzuführen;
ein Sendemodul (603), ausgelegt zum: wenn das Beurteilungsmodul bestimmt, dass der Netzserver dem Benutzergerät erlaubt, hinsichtlich sowohl der Zugangsgruppe als auch der Anwendungsart Uplink-Datenübertragung durchzuführen, Senden von Uplink-Daten an den Netzserver; und
ein Steuerungsmodul (604), ausgelegt zum: wenn das Beurteilungsmodul bestimmt, dass der Netzserver dem Benutzergerät nicht erlaubt, hinsichtlich der Zugangsgruppe und/oder der Anwendungsart Uplink-Datenübertragung durchzuführen, Steuern des Sendemoduls, die Uplink-Daten nicht an den Netzserver zu senden;
wobei das Sendemodul (603) ferner ausgelegt ist zum: wenn sich das Benutzergerät in einem Zellen-Pagingkanal-Zustand bzw. CELL-PCH-Zustand oder einem UTRAN-Registrierungsgebiet-Pagingkanal-Zustand bzw. URA-PCH-Zustand befindet, Senden von Uplink-Datenübertragungssignalisierung an den Netzserver, wobei die Uplink-Datenübertragungssignalisierung eine Messberichtssignalisierung bzw. MR-Signalisierung oder Zellenaktualisierungssignalisierung bzw. CU-Signalisierung umfasst;
wobei das Empfangsmodul (601) ferner ausgelegt ist zum: wenn die Uplink-Datenübertragungssignalisierung die CU-Signalisierung umfasst und die CU-Signalisierung die Anwendungsart der Anwendung auf dem Benutzergerät umfasst, Empfangen von durch den Netzserver zurückgeschickten Antwortinformationen für die Anwendungsart; und
das Sendemodul (603) ausgelegt ist zum Senden von Uplink-Daten an den Netzserver durch:
wenn die Antwortinformationen angeben, dass der Anwendungsart des Benutzergeräts erlaubt ist, Uplink-Datenübertragung durchzuführen, und der Netzserver dem Benutzergerät erlaubt, hinsichtlich sowohl der Zugangsgruppe als auch der Anwendungsart Uplink-Datenübertragung durchzuführen, Senden der Uplink-Daten an den Netzserver.

7. Benutzergerät nach Anspruch 6, wobei das Beurteilungsmodul (602) ein Beurteilungsuntermodul (6021) und ein Bestimmungsuntermodul (6022) umfasst, wobei das Beurteilungsuntermodul (6021) ausgelegt ist zum: Bestimmen, basierend auf dem ersten Zugangssteuerungsparameter, ob der Netzserver einem Benutzergerät, das in einer Zugangsgruppe, in welcher sich das Benutzergerät befindet, enthalten ist, erlaubt, Uplink-Datenübertragung durchzuführen, und Bestimmen, basierend auf dem zweiten Zugangssteuerungsparameter, ob der Netzserver einer Anwendungsart einer Anwendung auf dem Benutzergerät erlaubt, Uplink-Datenübertragung durchzuführen;
wobei das Bestimmungsuntermodul (6022) ausgelegt ist zum: wenn das Bestimmungsuntermodul bestimmt, dass der Netzserver dem Benutzergerät, das in der Zugangsgruppe, in welcher sich das Benutzergerät befindet, enthalten ist, erlaubt, Uplink-Datenübertragung durchzuführen, und der Anwendungsart der Anwendung auf dem Benutzergerät erlaubt, Uplink-Datenübertragung durchzuführen, Bestimmen, dass der Netzserver dem Benutzergerät erlaubt, hinsichtlich sowohl der Zugangsgruppe als auch der Anwendungsart Uplink-Datenübertragung durchzuführen; und
das Bestimmungsuntermodul (6022) ferner ausgelegt ist zum: wenn das Beurteilungsuntermodul bestimmt, dass der Netzserver dem Benutzergerät, das in der Zugangsgruppe, in welcher sich das Benutzergerät befindet, enthalten ist, nicht erlaubt, Uplink-Datenübertragung durchzuführen, und/oder der Anwendungsart der Anwendung auf dem Benutzergerät nicht erlaubt, Uplink-Datenübertragung durchzuführen, Bestimmen, dass der Netzserver dem Benutzergerät nicht erlaubt, hinsichtlich der Zugangsgruppe und/oder der Anwendungsart Uplink-Datenübertragung durchzuführen.

8. Benutzergerät nach Anspruch 6 oder 7, wobei das Steuerungsmodul (604) ausgelegt ist zum Steuern des Sendemoduls (603), die Uplink-Daten nicht an den Netzserver zu senden, durch:
wenn sich das Benutzergerät in einem Zellen-Pagingkanal-Zustand bzw. CELL-PCH-Zustand oder einem UTRAN-Registrierungsgebiet-Pagingkanal-Zustand bzw. URA-PCH-Zustand befindet, Steuern des Sendemoduls (603), die Uplink-Datenübertragungssignalisierung nicht an den Netzserver zu senden und die Uplink-Daten nicht an den Netzserver zu senden.

9. Benutzergerät nach Anspruch 6, wobei
das Empfangsmodul (601) ferner ausgelegt ist zum: wenn die Uplink-Datenübertragungssignalisierung die CU-Signalisierung umfasst und die CU-Signalisierung die Anwendungsart der Anwendung auf dem Benutzergerät umfasst, Empfangen von durch den Netzserver zurückgeschickten Antwortinformationen für die Anwendungsart; und
das Steuerungsmodul (604) ferner ausgelegt ist zum: wenn die Antwortinformationen angeben, dass der Anwendungsart des Benutzergeräts nicht erlaubt ist, Uplink-Datenübertragung durchzuführen, und die Antwortinformationen ferner eine Wartezeit umfassen, Steuern des Sendemoduls (603), die Uplink-Daten der Anwendungsart nicht an den Netzserver zu senden und die CU-Signalisierung, die die Anwendungsart umfasst, nicht innerhalb der Wartezeit an den Netzserver zu senden.

10. Benutzergerät nach Anspruch 9, wobei das Benutzergerät ferner Folgendes umfasst:
ein Erzeugungsmodul (605), ausgelegt zum Erzeugen einer Zufallszeit für die Antwortinformationen, wobei die Zufallszeit kleiner oder gleich der Wartezeit ist; und
das Steuerungsmodul (604) ausgelegt ist zum Steuern des Sendemoduls (603), die CU-Signalisierung, die die Anwendungsart umfasst, nicht innerhalb der Wartezeit an den Netzserver zu senden, durch:
Steuern des Sendemoduls (603), die CU-Signalisierung, die die Anwendungsart umfasst, nicht innerhalb der Zufallszeit an den Netzserver zu senden.

11. Netzserver, **dadurch gekennzeichnet, dass** er Folgendes umfasst:
ein Sendemodul (1001), ausgelegt zum Senden eines Zugangssteuerungsparameters an ein Benutzergerät, wobei der Zugangssteuerungsparameter verwendet wird zum Steuern einer Uplink-Datenübertragung des Benutzergeräts, und der Zugangssteuerungsparameter einen ersten Zugangssteuerungsparameter, basierend auf einer Zugangsgruppe, und einen zweiten Zugangssteuerungsparameter, basierend auf einer Anwendungsart, umfasst; und
ein Empfangsmodul (1002), ausgelegt zum Empfangen von durch das Benutzergerät gesendeten Uplink-Daten, wobei die Uplink-Daten durch das Benutzergerät an den Netzserver gesendet werden, nachdem das Benutzergerät bestimmt hat, basierend auf dem ersten Zugangssteuerungsparameter und dem zweiten Zugangssteuerungsparameter, dass der Netzserver dem Benutzergerät erlaubt, Uplink-Datenübertragung durchzuführen;
wobei das Empfangsmodul (1002) ferner ausgelegt ist zum Empfangen, vor dem Empfangen der durch das Benutzergerät gesendeten Uplink-Daten, von durch das Benutzergerät gesendeter Uplink-Datenübertragungssignalisierung, wobei die Uplink-Datenübertragungssignalisierung eine Messberichtssignalisierung bzw. MR-Signalisierung oder Zellenaktualisierungssignalisierung bzw. CU-Signalisierung umfasst;
der Netzserver ausgelegt ist zum Bestimmen, wenn das Empfangsmodul (1002) CU-Signalisierung empfängt und die CU-Signalisierung eine Anwendungsart einer Anwendung auf dem Benutzergerät umfasst, ob der Anwendungsart erlaubt werden soll, Uplink-Datenübertragung durchzuführen; und
das Sendemodul (1001) ferner ausgelegt ist zum Zurückschicken, wenn der Netzserver bestimmt, dass Durchführen von Datenübertragung für die Anwendungsart erlaubt ist, von Antwortinformationen an das Benutzergerät, um dem Benutzergerät zu erlauben, Uplink-Datenübertragung für die Anwendungsart durchzuführen.

## Revendications

1. Procédé de commande de transmission de données sur une liaison montante, **caractérisé en ce qu'**il comprend les étapes consistant à :
recevoir (S201), par un terminal d'utilisateur, un paramètre de contrôle d'accès d'un serveur de réseau, dans lequel le paramètre de contrôle d'accès est utilisé pour contrôler la transmission des données sur la liaison montante du terminal d'utilisateur, et le paramètre de contrôle d'accès comprend un premier paramètre de contrôle d'accès basé sur un groupe d'accès et un second paramètre de contrôle d'accès basé sur un type d'application ;
déterminer (S202), par le terminal d'utilisateur en fonction du premier paramètre de contrôle d'accès et du second paramètre de contrôle d'accès, si le serveur de réseau autorise le terminal d'utilisateur à effectuer une transmission des données sur la liaison montante en termes de groupe d'accès et de type d'application ; et
lorsque le serveur de réseau autorise le terminal d'utilisateur à effectuer une transmission des données sur la liaison montante en termes de groupe d'accès et de type d'application, envoyer (S203), par le terminal d'utilisateur, des données sur la liaison montante au serveur de réseau ; ou
lorsque le serveur de réseau n'autorise pas le terminal d'utilisateur à effectuer une transmission des données sur la liaison montante en termes d'au moins un parmi le groupe d'accès et le type d'application, omettre l'envoi (S204), par le terminal d'utilisateur, des données de la liaison montante au serveur de réseau ;
dans lequel, lorsque le terminal d'utilisateur se trouve dans un état de canal de recherche de cellule, CELL-PCH (cell paging channel), ou dans un état de canal de recherche d'une zone d'enregistrement UTRAN, URA-PCH (UTRAN registration area paging channel), avant l'envoi, par le terminal d'utilisateur, des données de la liaison montante au serveur de réseau, le procédé comprend en outre l'étape consistant à :
envoyer, par le terminal d'utilisateur, une signalisation de transmission des données sur la liaison montante au serveur de réseau, dans lequel la signalisation de transmission des données sur la liaison montante comprend une signalisation de compte rendu de mesures, MR (measurement report), ou une signalisation de mise à jour de cellule, CU (cell update) ; et
dans lequel, lorsque la signalisation de transmission des données sur la liaison montante comprend la signalisation de CU, et que la signalisation de CU comprend le type d'application concernant l'application sur le terminal d'utilisateur, après l'envoi par le terminal d'utilisateur de la signalisation de transmission des données sur la liaison montante au serveur de réseau, le procédé comprend en outre l'étape consistant à :
recevoir, par le terminal d'utilisateur, les informations de réponse renvoyées par le serveur de réseau pour le type d'application ; et
un mode spécifique de l'envoi, par le terminal d'utilisateur, des données sur la liaison montante au serveur de réseau consiste à :
lorsque les informations de réponse indiquent que le type d'application du terminal d'utilisateur est autorisé à effectuer la transmission des données sur la liaison montante et que le serveur de réseau autorise le terminal d'utilisateur à effectuer la transmission des données sur la liaison montante en termes de groupe d'accès et de type d'application, envoyer, par le terminal d'utilisateur, les données de la liaison montante au serveur de réseau.

2. Procédé selon la revendication 1, dans lequel la détermination, par le terminal d'utilisateur en fonction du premier paramètre de contrôle d'accès et du second paramètre de contrôle d'accès, du fait que le serveur de réseau autorise ou non le terminal d'utilisateur à effectuer une transmission des données sur la liaison montante en termes de groupe d'accès et de type d'application comprend les étapes consistant à :
déterminer, par le terminal d'utilisateur sur la base du premier paramètre de contrôle d'accès, si le serveur de réseau autorise un terminal d'utilisateur, compris dans un groupe d'accès dans lequel se trouve le terminal d'utilisateur, à effectuer une transmission des données sur la liaison montante, et déterminer, sur la base du second paramètre de contrôle d'accès, si le serveur de réseau autorise un type d'application concernant une application sur le terminal d'utilisateur à effectuer une transmission des données sur la liaison montante ; et
lorsque le serveur de réseau autorise le terminal d'utilisateur compris dans le groupe d'accès dans lequel se trouve le terminal d'utilisateur à effectuer une transmission des données sur la liaison montante, et autorise le type d'application concernant l'application exécutée sur le terminal d'utilisateur à effectuer une transmission des données sur la liaison montante, déterminer, par le terminal d'utilisateur, que le serveur de réseau autorise le terminal d'utilisateur à effectuer une transmission des données sur la liaison montante en termes de groupe d'accès et de type d'application ; ou
lorsque le serveur de réseau n'autorise pas le terminal d'utilisateur compris dans le groupe d'accès dans lequel se trouve le terminal d'utilisateur à effectuer une transmission des données sur la liaison montante, et/ou n'autorise pas le type d'application concernant l'application exécutée sur le terminal d'utilisateur à effectuer une transmission des données sur la liaison montante, déterminer, par le terminal d'utilisateur, que le serveur de réseau n'autorise pas le terminal d'utilisateur à effectuer une transmission des données sur la liaison montante en termes au moins de l'un parmi le groupe d'accès et le type d'application.

3. Procédé selon la revendication 1 ou 2, dans lequel, lorsque le terminal d'utilisateur se trouve dans un état de canal de recherche de cellule, CELL-PCH, ou dans un état de canal de recherche de zone d'enregistrement UTRAN, URA-PCH, l'omission de l'envoi par le terminal d'utilisateur des données de la liaison montante au serveur de réseau comprend les étapes consistant à :
omettre l'envoi, par le terminal utilisateur, de la signalisation de transmission des données sur la liaison montante au serveur de réseau, et omettre l'envoi des données de la liaison montante au serveur de réseau.

4. Procédé selon la revendication 1, dans lequel, lorsque la signalisation de transmission des données sur la liaison montante comprend la signalisation de CU, et que la signalisation de CU comprend le type d'application concernant l'application sur le terminal d'utilisateur, après l'envoi par le terminal d'utilisateur de la signalisation de transmission des données sur la liaison montante au serveur de réseau, le procédé comprend en outre l'étape consistant à :
recevoir, par le terminal d'utilisateur, les informations de réponse renvoyées par le serveur de réseau pour le type d'application ; et
lorsque les informations de réponse indiquent que le type d'application du terminal d'utilisateur n'est pas autorisé à effectuer une transmission des données sur la liaison montante, et que les informations de réponse comprennent en outre un temps d'attente pour le type d'application, omettre l'envoi, par le terminal utilisateur, des données de la liaison montante concernant le type d'application au serveur de réseau, et omettre l'envoi de la signalisation de CU comprenant le type d'application au serveur de réseau au cours du temps d'attente.

5. Procédé de commande de transmission de données sur une liaison montante, **caractérisé en ce qu'**il comprend les étapes consistant à :
envoyer (S501), par un serveur de réseau, un paramètre de contrôle d'accès à un terminal d'utilisateur, dans lequel le paramètre de contrôle d'accès est utilisé pour contrôler la transmission des données sur la liaison montante du terminal d'utilisateur, et le paramètre de contrôle d'accès comprend un premier paramètre de contrôle d'accès basé sur un groupe d'accès et un second paramètre de contrôle d'accès basé sur un type d'application ; et
recevoir (S502), par le serveur de réseau, des données de la liaison montante envoyées par le terminal d'utilisateur, dans lequel les données de la liaison montante sont envoyées par le terminal d'utilisateur au serveur de réseau après que le terminal d'utilisateur a déterminé, sur la base du premier paramètre de contrôle d'accès et du second paramètre de contrôle d'accès, que le serveur de réseau autorise le terminal d'utilisateur à effectuer une transmission des données sur la liaison montante ;
dans lequel le procédé avant la réception (S502) des données de liaison montante envoyées par le terminal d'utilisateur contient en outre les étapes consistant à recevoir, par le serveur de réseau, une signalisation de transmission des données sur la liaison montante envoyée par le terminal d'utilisateur, la signalisation de transmission des données sur la liaison montante comprenant une signalisation de compte rendu de mesures, MR, ou une signalisation de mise à jour de cellule, CU ;
déterminer, par le serveur de réseau, lorsque le serveur de réseau reçoit la signalisation de CU, la signalisation de CU comprenant un type d'application concernant une application exécutée sur le terminal utilisateur, si l'on doit autoriser ou non le type d'application à effectuer une transmission des données sur la liaison montante ; et
renvoyer, par le serveur de réseau, si le serveur de réseau détermine que la transmission des données est autorisée pour le type d'application, des informations de réponse au terminal d'utilisateur concernant le type d'application permettant au terminal d'utilisateur d'effectuer la transmission des données sur la liaison montante.

6. Terminal d'utilisateur, **caractérisé en ce qu'**il comprend :
un module de réception (601) configuré pour recevoir un paramètre de contrôle d'accès d'un serveur de réseau, dans lequel le paramètre de contrôle d'accès est utilisé pour contrôler la transmission des données sur la liaison montante du terminal d'utilisateur, et le paramètre de contrôle d'accès comprend un premier paramètre de contrôle d'accès basé sur un groupe d'accès et un second paramètre de contrôle d'accès basé sur un type d'application ;
un module d'évaluation (602), configuré pour déterminer, en fonction du premier paramètre de contrôle d'accès et du second paramètre de contrôle d'accès, si le serveur de réseau autorise le terminal d'utilisateur à effectuer une transmission des données sur la liaison montante en termes de groupe d'accès et de type d'application ;
un module d'émission (603), configuré pour : lorsque le module d'évaluation détermine que le serveur de réseau autorise le terminal d'utilisateur à effectuer une transmission des données sur la liaison montante aussi bien en termes de groupe d'accès que de type d'application, envoyer les données de la liaison montante au serveur de réseau ; et
un module de commande (604), configuré pour : lorsque le module d'évaluation détermine que le serveur de réseau n'autorise pas le terminal d'utilisateur à effectuer une transmission des données sur la liaison montante en termes au moins de l'un parmi le groupe d'accès et le type d'application, commander au module d'émission de ne pas envoyer les données sur la liaison montante au serveur de réseau ;
dans lequel le module d'émission (603) est en outre configuré pour, lorsque le terminal utilisateur se trouve dans un état de canal de recherche de cellule, CELL-PCH, ou dans un état de canal de recherche d'une zone d'enregistrement UTRAN, URA-PCH, envoyer une signalisation de transmission des données sur la liaison montante au serveur de réseau, dans lequel la signalisation de transmission des données sur la liaison montante comprend une signalisation de compte rendu de mesures, MR, ou une signalisation de mise à jour de cellule, CU;
le module de réception (601) est en outre configuré pour : lorsque la signalisation de transmission des données sur la liaison montante comprend la signalisation de CU, et que la signalisation de CU comprend le type d'application concernant l'application exécutée sur le terminal d'utilisateur, recevoir des informations de réponse renvoyées par le serveur de réseau pour le type d'application ; et
le module d'émission (603) est configuré pour : envoyer les données de la liaison montante au serveur de réseau, à l'aide de l'étape consistant à :
lorsque les informations de réponse indiquent que le type d'application du terminal d'utilisateur est autorisé à effectuer la transmission des données sur la liaison montante et que le serveur de réseau permet au terminal d'utilisateur d'effectuer la transmission des données sur la liaison montante en termes de groupe d'accès et de type d'application, envoyer les données de la liaison montante au serveur de réseau.

7. Terminal d'utilisateur selon la revendication 6, dans lequel le module d'évaluation (602) comprend un sous-module d'évaluation (6021) et un sous-module de détermination (6022), dans lequel le sous-module d'évaluation (6021) est configuré pour : déterminer, sur la base du premier paramètre de contrôle d'accès, si le serveur de réseau autorise un terminal d'utilisateur, compris dans un groupe d'accès dans lequel se trouve le terminal d'utilisateur, à effectuer une transmission des données sur la liaison montante ; et déterminer, sur la base du second paramètre de contrôle d'accès, si le serveur de réseau autorise un type d'application concernant une application sur le terminal d'utilisateur à effectuer une transmission des données sur la liaison montante ;
le sous-module de détermination (6022) est configuré pour : lorsque le sous-module d'évaluation détermine que le serveur de réseau autorise le terminal d'utilisateur compris dans le groupe d'accès dans lequel se trouve le terminal d'utilisateur à effectuer une transmission des données sur la liaison montante, et autorise le type d'application concernant l'application exécutée sur le terminal d'utilisateur à effectuer une transmission des données sur la liaison montante, déterminer que le serveur de réseau autorise le terminal d'utilisateur à effectuer une transmission des données sur la liaison montante en termes de groupe d'accès et de type d'application ; et
le sous-module de détermination (6022) est en outre configuré pour : lorsque le sous-module d'évaluation détermine que le serveur de réseau n'autorise pas le terminal d'utilisateur compris dans le groupe d'accès dans lequel se trouve le terminal d'utilisateur à effectuer une transmission des données sur la liaison montante, et/ou n'autorise pas le type d'application concernant l'application exécutée sur le terminal d'utilisateur à effectuer la transmission des données sur la liaison montante, déterminer que le serveur de réseau n'autorise pas le terminal d'utilisateur à effectuer une transmission des données sur la liaison montante en termes au moins de l'un parmi le groupe d'accès et le type d'application.

8. Terminal d'utilisateur selon la revendication 6 ou 7, dans lequel le module de commande (604) est configuré pour commander au module d'émission (603) de ne pas envoyer les données de la liaison montante au serveur de réseau à l'aide de l'étape consistant à :
lorsque le terminal d'utilisateur se trouve dans un état de canal de recherche de cellule, CELL-PCH, ou dans un état de canal de recherche de zone d'enregistrement UTRAN, URA-PCH, commander au module d'émission (603) de ne pas envoyer la signalisation de transmission des données sur la liaison montante au serveur de réseau, et de ne pas envoyer les données de la liaison montante au serveur de réseau.

9. Terminal d'utilisateur selon la revendication 6, dans lequel
le module de réception (601) est en outre configuré pour : lorsque la signalisation de transmission des données sur la liaison montante comprend la signalisation de CU, et que la signalisation de CU comprend le type d'application concernant l'application exécutée sur le terminal d'utilisateur, recevoir les informations de réponse renvoyées par le serveur de réseau pour le type d'application ; et
le module de commande (604) est en outre configuré pour : lorsque les informations de réponse indiquent que le type d'application du terminal d'utilisateur n'est pas autorisé à effectuer une transmission des données sur la liaison montante, et que les informations de réponse comprennent en outre un temps d'attente, commander au module d'émission (603) de ne pas envoyer au serveur de réseau les données de la liaison montante concernant le type d'application, et de ne pas envoyer la signalisation de CU comprenant le type d'application au serveur de réseau au cours du temps d'attente.

10. Terminal d'utilisateur selon la revendication 9, dans lequel l'équipement d'utilisateur comprend en outre :
un module de génération (605), configuré pour générer une durée aléatoire pour les informations de réponse, dans lequel la durée aléatoire est inférieure ou égale au temps d'attente ; et
le module de commande (604) est configuré pour commander au module d'émission (603) de ne pas envoyer la signalisation de CU comprenant le type d'application au serveur de réseau au cours du temps d'attente à l'aide de l'étape consistant à :
commander au module d'émission (603) de ne pas envoyer la signalisation de CU comprenant le type d'application au serveur de réseau au cours de la durée aléatoire.

11. Serveur de réseau, **caractérisé en ce qu'**il comprend :
un module d'émission (1001), configuré pour envoyer un paramètre de contrôle d'accès à un terminal d'utilisateur, dans lequel le paramètre de contrôle d'accès est utilisé pour contrôler la transmission des données sur la liaison montante du terminal d'utilisateur, et le paramètre de contrôle d'accès comprend un premier paramètre de contrôle d'accès basé sur un groupe d'accès et un second paramètre de contrôle d'accès basé sur un type d'application ; et
un module de réception (1002), configuré pour recevoir les données de la liaison montante envoyées par le terminal d'utilisateur, dans lequel les données de la liaison montante sont envoyées par le terminal d'utilisateur au serveur de réseau après que le terminal d'utilisateur a déterminé, sur la base du premier paramètre de contrôle d'accès et du second paramètre de contrôle d'accès, que le serveur de réseau autorise le terminal d'utilisateur à effectuer une transmission des données sur la liaison montante ;
dans lequel le module de réception (1002) est en outre configuré pour recevoir, avant la réception des données de la liaison montante envoyées par le terminal d'utilisateur, une signalisation de transmission des données sur la liaison montante envoyée par le terminal d'utilisateur, la signalisation de transmission des données sur la liaison montante comprenant une signalisation de compte rendu de mesures, MR, ou une signalisation de mise à jour de cellule, CU ;
le serveur du réseau est configuré pour déterminer, lorsque le module de réception (1002) a reçu la signalisation de CU et que la signalisation de CU comprend un type d'application concernant une application exécutée sur le terminal utilisateur, si l'on doit autoriser ou non le type d'application à effectuer une transmission des données sur la liaison montante ; et
le module d'émission (1001) est en outre configuré pour renvoyer, si le serveur de réseau a déterminé que la transmission des données est autorisée pour le type d'application, des informations de réponse au terminal d'utilisateur concernant le type d'application permettant au terminal d'utilisateur d'effectuer la transmission des données sur la liaison montante.
